# EUROPEAN PATENT APPLICATION

(11) **EP 4 701 220 A1**
(43) Date of publication of application: **25.02.2026**
(21) Application number: 24792627.2
(22) Date of filing: 15.04.2024
(51) Int. Cl.: H04Q 9/00, A01B 69/00

(54) **REMOTE SUPPORT SYSTEM**

(30) Priority: 20.04.2023 JP 2023069274
(71) Applicant: KUBOTA CORPORATION, Osaka-shi, Osaka 556-8601 (JP)
(72) Inventor: TOKIEDA, Yoshiki, Sakai-shi, Osaka 590-0908 (JP); FUJII, Takafumi, Sakai-shi, Osaka 590-0908 (JP)
(74) Representative: Cabinet Beau de Loménie
(86) International application number: PCT/JP2024/014955
(87) International publication number: WO 2024/219352

(57) **Abstract**

Support is provided for smooth remote manipulation of a working machine performed by a human remote manipulator and smooth manual manipulation or repair of the working machine performed by a worker.

A remote support system (100) includes a remote device (30) to remotely manipulate a working vehicle (1) (working machine), a second controller (21) provided in or on the working vehicle (1) and configured or programmed to control the working vehicle (1) based on remote manipulation information relating to the remote manipulation from the remote device (30), and a notifier (ND) to provide a notification indicating that the remote manipulation is to be performed when the working vehicle (1) receives the remote manipulation information sent from the remote device (30) and provide a notification indicating that manual manipulation or repair is to be performed when the remote device (30) receives information relating to the manual manipulation or the repair of the working vehicle (1).

## Description

### Technical Field

The present invention relates to remote support systems to remotely manipulate working machines.

### Background Art

Patent Literature 1 discloses a remote operation support system to prohibit remote operation of a working machine performed by a human remote manipulator when the working machine is in a remote-operation mode for remote operation and a near field communication is established between the working machine and a portable terminal carried by a worker (for example, an actual machine operator).

### Citation List

### Patent Literature

PTL 1: Japanese Unexamined Patent Application Publication No. 2021-88835

### Summary of Invention

### Technical Problem

With the remote operation support system disclosed in Patent Literature 1, the remote operation of the working machine is prohibited when the working machine is in the remote-operation mode and a worker is near the working machine to be operated remotely, and the remote operation of the working machine is prevented in advance. Thus, the worker near the working machine does not notice that the remote operation was prevented in advance. Furthermore, the remote operation support system disclosed in Patent Literature 1 requires a human remote manipulator to provide a notification to ask the worker to leave the working machine, and the remote operation is started after the worker leaves the working machine. Thus, the remote operation cannot be performed smoothly. For the worker near the working machine, the worker does not know when the remote operation is performed, and therefore the manual operation or repair of the working machine cannot be smoothly performed by the worker.

In view of the above issue, it is an object of the present invention to provide a remote support system to provide support for smooth remote manipulation of the working machine performed by a human remote manipulator and smooth manual manipulation or repair of the working machine performed by a worker.

### Solution to Problem

Technical solutions of the present invention to attain the above object include the following characteristic features.

A remote support system according to an example embodiment of the present invention includes a remote device to remotely manipulate a working machine, a controller provided in or on the working machine and configured or programmed to control the working machine based on remote manipulation information relating to the remote manipulation from the remote device, and a notifier to provide a notification indicating that the remote manipulation is to be performed when the working machine receives the remote manipulation information sent from the remote device and provide a notification indicating that manual manipulation or repair is to be performed when the remote device receives information relating to the manual manipulation or the repair of the working machine.

The remote support system may include a communication terminal to send information indicating that the remote manipulation of the working machine is not permitted to the remote device when the manual manipulation or the repair is to be performed, and send information indicating that the remote manipulation of the working machine is permitted to the remote device when the manual manipulation or the repair is not to be performed.

The remote device may be operable to stop the remote manipulation upon receiving the information indicating that the remote manipulation of the working machine is not permitted, and not stop the remote manipulation upon receiving the information indicating that the remote manipulation of the working machine is permitted.

The remote device may be operable to send information indicating that the manual manipulation or the repair is not permitted to the communication terminal when performing the remote manipulation, and send information indicating that the manual manipulation or the repair is permitted to the communication terminal when not performing the remote manipulation .

The controller may be configured or programmed to actuate the working machine based on the manual manipulation when the communication terminal receives the information indicating that the manual manipulation is permitted, and not actuate the working machine based on the manual manipulation when the communication terminal receives the information indicating that the manual manipulation is not permitted.

The remote device may be operable to send a not-performing notification indicating that the remote manipulation is not to be performed to the communication terminal. The communication terminal may be operable to provide a notification of the not-performing notification.

The communication terminal may include a first terminal to be carried by a worker, and the controller may be configured or programmed to determine that the remote manipulation based on the remote manipulation information is impermissible if a position indicated by position information relating to the first terminal is within a first range from the working machine, and determine that the remote manipulation of the working machine is permissible if the position is outside the first range.

The notifier may include a first notifier provided in or on the remote device. The first notifier may be configured or programmed to provide a notification of at least one of (i) whether or not the first terminal is positioned within the first range from the working machine or (ii) a distance between the working machine and the first terminal.

The remote device may be operable to send, to the communication terminal, the not-performing notification and a notification of content of the remote manipulation not performed and indicated by the remote manipulation information. The controller may be configured or programmed to send, to the communication terminal, the not-performing notification and the notification of the content of the remote manipulation not performed. The communication terminal may be operable to provide a notification indicating that the remote manipulation of the working machine was not performed and the content of the remote manipulation not performed.

The controller may be configured or programmed to perform the remote manipulation based on the remote manipulation information with restriction and send a restricted-performance notification indicating that the remote manipulation is to be performed with restriction to the first terminal when the first terminal is positioned within a second range defined outside the first range. The first terminal may be operable to provide a notification indicating that the remote manipulation of the working machine is to be performed with restriction and content of the remote manipulation indicated by the remote manipulation information.

The controller may be configured or programmed to acquire worker information indicating the worker carrying the first terminal via communication with the first terminal and send the worker information and the position information to the remote device. The first notifier may be configured or programmed to provide a notification of the worker information and the position information received by the remote device.

The worker information may include contact information indicating a contact detail of the worker carrying the first terminal. The remote device may be operable to make contact using the contact detail indicated by the contact information upon receiving a contact instruction from a human remote manipulator.

The remote device may include a memory and/or a storage to store a work plan. The work plan may be defined in advance such that a plurality of planned work items are arranged in the order of working time, each of the plurality of planned work items including a work item to be performed at the working machine, a work time indicating a time period from a scheduled start time to a scheduled end time of the work item, content of work relating to the work item to be performed by the human remote manipulator, and content of work relating to the work item to be performed by the worker. The first notifier may be configured or programmed to provide a notification of the work plan and the worker information received by the remote device.

The first notifier may be configured or programmed to provide a notification of a preparation of the remote manipulation at the scheduled end time of the work item performed by the worker that immediately precedes the work item relating to the remote manipulation in the work plan. The first notifier may be configured or programmed to provide a notification of a start of the remote manipulation when the first terminal is not positioned within the first range at the scheduled start time of the work item relating to the remote manipulation . The remote device may be operable to make contact using the contact detail indicated by the contact information based on the contact instruction from the human remote manipulator when the first terminal is positioned within the first range.

The remote device may be operable to send a work preparation signal to the first terminal at the scheduled end time of the work item relating to the remote manipulation in a case that the work item immediately following the work item relating to the remote manipulation of the working machine is the work item to be performed by a worker in the work plan. The first terminal may be operable to provide a notification of a work preparation upon receiving the work preparation signal. The remote device may be operable to send a stop signal of the remote manipulation to the first terminal upon receiving a stop instruction to stop the remote manipulation from the human remote manipulator. The first terminal may be configured or programmed to provide a notification of a start of work upon receiving the stop signal of the remote manipulation, and provide a notification requesting to contact the remote device when the first terminal has not received the stop signal of the remote manipulation even after the scheduled start time of the work item to be performed by a worker.

The first notifier may include a display provided in or on the remote device and operable to provide a notification indicating that the manual manipulation or the repair is to be performed.

The communication terminal may include a second terminal provided in or on the working machine and operable to provide a notification indicating that the remote manipulation is performed.

### Advantageous Effects of Invention

The present invention makes it possible to provide support for smooth remote manipulation of the working machine performed by a human remote manipulator and smooth manual manipulation or repair of the working machine performed by a worker.

### Brief Description of Drawings

[FIG. 1] FIG. 1 is a block diagram of a remote support system of an example embodiment of the present invention.
[FIG. 2] FIG. 2 is a side view of a tractor as an example of a working vehicle.
[FIG. 3] FIG. 3 illustrates an example of correspondence data.
[FIG. 4] FIG. 4 illustrates an example of a planned travel route.
[FIG. 5] FIG. 5 illustrates an example of a remote operation screen.
[FIG. 6A] FIG. 6A illustrates an example of a first range and a second range from a working vehicle.
[FIG. 6B] FIG. 6B is a diagram showing that, for example, remote operation is stopped or restricted depending on the positional relationship between a working vehicle and an electronic device.
[FIG. 7A] FIG. 7A illustrates a flow of a process in a remote support system.
[FIG. 7B] FIG. 7B illustrates a flow of a process in a remote support system.
[FIG. 8A] FIG. 8A is a flowchart showing operations of a working vehicle remotely operated.
[FIG. 8B] FIG. 8B is a flowchart showing operations of a remote device when remotely manipulating a working vehicle.
[FIG. 8C] FIG. 8C is a flowchart showing an example of a monitoring process of an electronic device.
[FIG. 8D] FIG. 8D is a flowchart showing an example of a notification process performed by an electronic device.
[FIG. 9] FIG. 9 illustrates an example of a notification screen when remote operation is not permitted.
[FIG. 10] FIG. 10 illustrates an example of a work plan in a remote support system of a second embodiment.
[FIG. 11] FIG. 11 illustrates an electronic device of a first variation.

### Description of Embodiments

### First embodiment

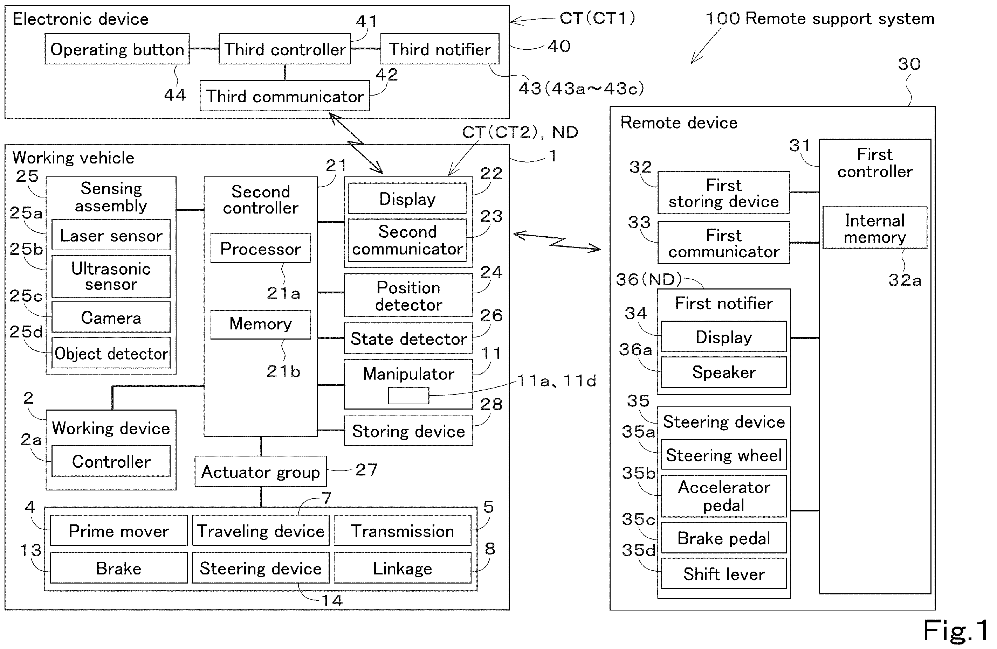

FIG. 1 is a block diagram of a remote support system 100 of an example embodiment of the present invention. As shown in FIG. 1, the remote support system 100 includes a working vehicle 1 as an example of a working machine, a remote device 30 to remotely manipulate the working vehicle 1 (working machine), and a communication terminal CT to output information to the remote device 30. The communication terminal CT includes a first terminal CT1 to be carried by a worker and a second terminal CT2 provided in or on the working vehicle 1.

The first terminal CT1 is an electronic device 40 such as an IC tag. The first terminal CT1 (electronic device 40) is operable to indirectly send information to the remote device 30 and send information to the remote device 30 via the second terminal CT2.

The second terminal CT2 provides a notification indicating that the remote manipulation is to be performed. The second terminal CT2 is a portable terminal device such as tablet device or a smartphone and includes a display 22 and a second communicator 23. The second terminal CT2 is operable to directly send information to the remote device 30.

The first terminal CT1 may be operable to directly send information to the remote device 30. The second terminal CT2 may be operable to send information to the remote device 30 via the first terminal CT1. It is noted that the communication terminal CT may be one of the first terminal CT1 or the second terminal CT2.

The remote support system 100 and the remote device 30 are operable to remotely manipulate (or remotely operate) the working vehicle 1 and remotely monitor the working vehicle 1. The working vehicle 1 is an agricultural machine (also referred to as "remotely manipulated agricultural machine") which can be remotely operated (for example, remotely caused to travel, remotely caused to work, etc.) by the remote device 30. The working vehicle 1 is a tractor, for example. The tractor is an example of an agricultural machine to perform agricultural work in an agricultural field. It is noted that the working machine may be an agricultural machine other than the working vehicle 1 (tractor), a construction machine or a working machine.

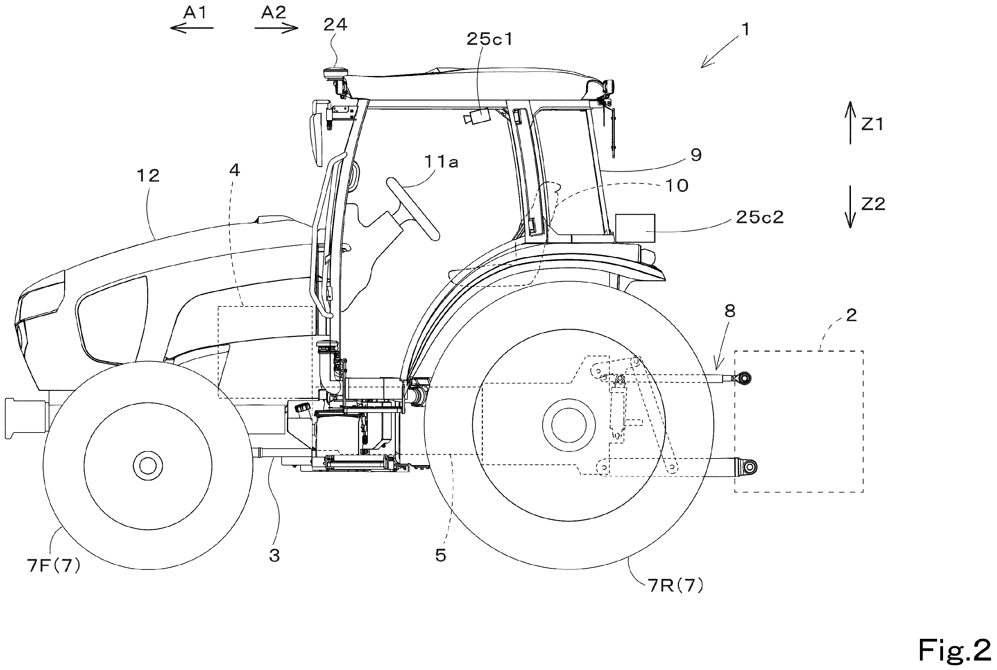

FIG. 2 is a side view of a tractor as an example of the working vehicle 1. The working vehicle 1 includes a vehicle body 3. The vehicle body 3 is provided with a traveling device 7. The traveling device 7 includes front wheels 7F and rear wheels 7R on left and right sides of the vehicle body 3 and supports the vehicle body 3 such that the vehicle body 3 is allowed to travel. The traveling device 7 may be a crawler traveling device.

The vehicle body 3 is provided with a prime mover 4, a transmission 5, a brake 13 (FIG. 1) and a steering device 14 (FIG. 1). The prime mover 4 includes an engine (diesel engine, gasoline engine), an electric motor, and/or the like. The transmission 5, for example, changes speed stages to change the driving force of the traveling device 7, and switch between forward travel and rearward travel of the traveling device 7. The brake 13 brakes the vehicle body 3. The steering device 14 steers the vehicle body 3.

A cabin 9 which is an example of a protection structure is provided on an upper portion of the vehicle body 3. An operator's seat 10 and a manipulator 11 are provided inside the cabin 9. The working vehicle 1 is a tractor to travel (operate) without drivers and perform work using a working device 2. However, the working vehicle 1 can also be caused to travel and perform work using the working device 2 by a worker (operator, driver) sitting in the operator's seat 10 operating the manipulator 11. The cabin 9 protects the operator's seat 10 by surrounding the front, rear, top and left and right sides of the operator's seat 10. The protection structure is not limited to the cabin 9, and may be a rollover protection structure (ROPS) or the like.

The direction indicated by an arrow A1 in FIG. 2 is the forward direction with respect to the working vehicle 1. The direction indicated by an arrow A2 is the rearward direction with respect to the working vehicle 1. The direction indicated by an arrow Z1 is the upward direction with respect to the working vehicle 1. The direction indicated by an arrow Z2 is the downward direction with respect to the working vehicle 1. A direction perpendicular to the arrows A1, A2, Z1 and Z2 is the width direction (left-right direction) with respect to the working vehicle 1. The near side in FIG. 2 is the left side of the working vehicle 1, and the far side in FIG. 2 is the right side of the working vehicle 1.

A linkage 8 is provided at a rear portion of the vehicle body 3. The linkage 8 includes a three-point linkage and/or the like. The linkage 8 is configured to attach and detach the working device 2 (implement or the like) thereto and therefrom. When the working device 2 is connected to the linkage 8 and the traveling device 7 is driven to cause the working vehicle 1 (vehicle body 3) to travel, the working device 2 can be towed. The linkage 8 is operable to raise and lower the working device 2, and change the posture of the working device 2.

Examples of the working device 2 include a tiller to perform tillage, a fertilizer spreader to spread fertilizer, an agricultural chemical spreader to spread agricultural chemicals, a harvester to harvest, a mower to mow grass or the like, a tedder to ted grass or the like, a rake to rake grass or the like, and a baler to bale grass or the like. These devices are each attachable to and detachable from the working vehicle 1 via the linkage 8. The working vehicle 1 performs agricultural work for an agricultural field using the working device 2.

A hood 12 is provided in front of the cabin 9. The hood 12 is attached to the vehicle body 3. A storage room is defined between the hood 12 and the vehicle body 3. The storage room houses a cooling fan, a radiator, a battery and the like as well as the prime mover 4.

As shown in FIG. 1, the working vehicle 1 includes a second controller 21, the display 22, the second communicator 23, a position detector 24, a sensing assembly 25, a state detector 26, a manipulator 11, an actuator group 27, the prime mover 4, the traveling device 7, the transmission 5, the brake 13, the steering device 14 and the linkage 8. The working vehicle 1 includes an in-vehicle network such as CAN, LIN and/or FlexRay. The second controller 21 is electrically connected to the display 22, the second communicator 23, the position detector 24, the sensing assembly 25, the state detector 26, the manipulator 11, the actuator group 27, the working device 2 connected to the working vehicle 1, and/or the like via the in-vehicle network.

The second controller 21 includes an electronic controller (ECU) including a processor 21a and a memory 21b. The second controller 21 is configured or programmed to control operations of elements of the working vehicle 1. The memory 21b includes a volatile or nonvolatile memory or the like. The memory 21b of the second controller 21 stores various information and data for the second controller 21 to control the operations of elements of the working vehicle 1 in a read/write manner.

The display 22 is a liquid crystal display or an OLED display, for example. The display 22 is operable to display and output via sound various information and notifications relating to the working vehicle 1 and the working device 2. The display 22 includes a touch panel, and an instruction is input by touching a display screen. For example, the second controller 21, upon receipt of input of an instruction for manual manipulation or an instruction for repair via the display 22, sends information relating to the manual manipulation of the working vehicle 1 or information relating to the repair of the working vehicle 1 (including the working device 2) to the remote device 30 via the second communicator 23.

The second communicator 23 is, for example, an in-vehicle communicator, and includes an antenna, integrated circuit (IC), electronic circuit and/or the like to communicate wirelessly via a cellular phone network, the internet or a wireless LAN. Thus, the second communicator 23 is configured or programmed to communicate wirelessly with the remote device 30. The second communicator 23 includes an interface for near field communication, and is configured or programmed to communicate with the electronic device 40 wirelessly.

Although the present embodiment discusses examples in which the working vehicle 1 and the remote device 30 communicate with each other via a cellular phone network or the like, additionally or alternatively, the working vehicle 1 and the remote device 30 may communicate with each other via a cellular phone network or the like and an external device such as a server or a repeater, for example. The working vehicle 1 and the remote device 30 may communicate directly with each other using near field wireless signals such as Bluetooth (registered trademark) Low Energy (BLE) signals or Ultra High Frequency (UHF) signals, for example. In this case, the second communicator 23 and the remote device 30 each need only include an interface for near field communication.

The position detector 24 is provided at an upper portion of the cabin 9 (FIG. 2), for example. It is noted that the position at which the position detector 24 is provided is not limited to the upper portion of the cabin 9, and may be another position in or on the vehicle body 3 or a predetermined position in or on the working device 2. The position detector 24 detects the position thereof (measured position information including latitude and longitude) using a satellite positioning system. Specifically, the position detector 24 receives signals transmitted from positioning satellite(s) (positions of positioning satellites, time of transmission, corrective information, etc.) to detect the position thereof based on the signals. The position detector 24 may detect, as the position thereof, the position which has been corrected based on signal(s) for correction transmitted from a base station (reference station) capable of receiving signals from positioning satellites.

The position detector 24 may include an inertial measurement unit such as a gyroscope and/or an acceleration sensor. In this case, the position detector 24 may correct the position (latitude and longitude) detected based on signals received from positioning satellites using the inertial measurement unit to detect the corrected position as the position thereof. The position detector 24 uses the detected position thereof as the position of the working vehicle 1. The position detector 24 may calculate the position of the working vehicle 1 based on the detected position thereof and prestored outline information relating to the working vehicle 1. The position detector 24 may calculate the position of the working device 2 based on the detected position thereof, the prestored outline information relating to the working device 2, and the attached position of the working device 2 with respect to the vehicle body 3.

The sensing assembly 25 is configured to sense (monitor) the surrounding area of the working vehicle 1. Specifically, the sensing assembly 25 includes laser sensor(s) 25a, ultrasonic sensor(s) 25b, camera(s) 25c and object detector(s) 25d. For example, the sensing assembly 25 includes a plurality of the laser sensors 25a and a plurality of the ultrasonic sensors 25b. The plurality of laser sensors 25a and the plurality of ultrasonic sensors 25b are provided at predetermined positions such as a front portion, a rear portion, left and right portions and/or the like of the working vehicle 1, and detect situations in the surrounding area including the front, rear, left and right sides and/or the like of the working vehicle 1 and objects in the surrounding area. For example, the laser sensors 25a and the ultrasonic sensors 25b are provided at predetermined positions in or on the vehicle body 3 such that objects within a predetermined target detection distance from the working vehicle 1 and positioned lower than the vehicle body 3 can also be detected.

The laser sensors 25a and the ultrasonic sensors 25b are examples of object sensors. It is noted that one of (i) the plurality of laser sensors 25a or (ii) the plurality of ultrasonic sensors 25b may be provided in the sensing assembly 25 as the object sensors. A plurality of other object sensors may be provided in the sensing assembly 25.

Each laser sensor 25a includes an optical sensor such as a light detection and ranging (LiDAR) sensor. Each laser sensor 25a applies pulsed measuring light (laser light) several million times per second from a light source such as a laser diode, and scans the measuring light in the horizontal direction or the vertical direction by reflecting the measuring light with a rotatable mirror to project the light onto a predetermined detection range (sensing range). Then, the laser sensor 25a receives the measuring light reflected by an object at light receiver(s).

Each object detector 25d includes an electronic circuit, an IC and/or the like to detect the presence or absence of objects, the positions of objects, the types of objects and/or the like based on light reception signals output from the light receiver of the laser sensor 25a. The object detector 25d detects the distance to an object based on the time from emission of measuring light from the laser sensor 25a to reception of the reflected light by the laser sensor 25a (time of flight (TOF) method). The objects detected by the object detectors 25d include a worksite where the working vehicle 1 travels and performs work, an agricultural field, crops in an agricultural field, the ground, road surface, and other objects, people and so on.

Each ultrasonic sensor 25b includes an aerial ultrasonic sensor such as sonar. The ultrasonic sensor 25b transmits measuring waves (ultrasonic waves) to a predetermined detection range via a transmitter, and receives, at a receiver, reflected waves which are the measuring waves reflected by an object. The object detector 25d detects the presence or absence of objects, the positions of objects, types of objects and/or the like based on signals output from the receiver of the ultrasonic sensor 25b. The object detector 25d detects the distance to an object based on the time from emission of measuring waves by the ultrasonic sensor 25b to reception of the reflected waves by the ultrasonic sensor 25b (TOF method).

Each camera 25c includes a charge coupled devices (CCD) camera including a CCD image sensor, a complementary metal oxide semiconductor (CMOS) camera including a CMOS image sensor, and/or the like. The cameras 25c are provided at predetermined portions such as the front portion, rear portion, left and right portions of the working vehicle 1, inside the cabin 9 and the like as shown in FIG. 2, capture images of the surrounding area including the front, rear, left and right sides and the like of the working vehicle 1, and output data of the captured images. The cameras 25c are examples of an imager.

For example, a plurality of the cameras 25c are provided in or on the working vehicle 1. Of the plurality of cameras 25c provided in or on the working vehicle 1, an internal camera 25c1 provided inside the cabin 9 as shown in FIG. 2 captures an image of an area in the front of the working vehicle 1 from the operator's seat 10. Specifically, the internal camera 25c1 captures an image of an area in front (in the direction of travel) of the working vehicle 1 that has the same or substantially the same field of view as the operator seated in the operator's seat 10. That is, the internal camera 25c1 is configured to obtain a captured image of an area in the direction of travel of the working vehicle 1.

Of the plurality of cameras 25c, a rear camera 25c2 provided at the rear portion of the cabin 9 as shown in FIG. 2 captures an image of an area rearward of the working vehicle 1. Specifically, the rear camera 25c2 captures an image of an area rearward (in the direction of rearward travel) of the working vehicle 1 from the rear portion of the cabin 9 when, for example, a shift lever is operated to a position for rearward travel. In other words, the rear camera 25c2 is operable to obtain a captured image of an area rearward of the working vehicle 1 (hereinafter may be referred to as a rear captured image). It is noted that the rear camera 25c2 may always capture an image of the area rearward of the working vehicle 1 regardless of the position of the shift lever (that is, a position for forward travel, a neutral position, the position for rearward travel).

Each object detector 25d is also configured to detect the presence or absence of objects, the positions of objects, types of objects and/or the like based on the data of the captured image output from the camera 25c.

The sensing assembly 25 senses (monitors) situations in the surrounding area of the working vehicle 1 and the working device 2 using the laser sensors 25a, the ultrasonic sensors 25b, the cameras 25c and the object detectors 25d, and output sensing information indicating the results of the sensing to the second controller 21. Although the sensing information includes at least detection information input from the object detectors 25d and data relating to the images captured by the cameras 25c, the sensing information may further include the detection information from the laser sensors 25a and the ultrasonic sensors 25b.

The state detector 26 detects the operating status of the working vehicle 1 and the working device 2. Specifically, the state detector 26 includes sensors provided in or on some portions of the working vehicle 1 and the working device 2, and a computing unit. The computing unit detects (computes) the operating status of the working vehicle 1 and the working device 2 based on output signals output from the sensors. The status relating to the working vehicle 1 detected by the state detector 26 includes driven and stopped states of each element included in the working vehicle 1, the direction of travel, travel speed, acceleration, posture and/or the like of the working vehicle 1. The status relating to the working device 2 detected by the state detector 26 includes the driven and stopped states of each element included in the working device 2, the posture and/or the like of the working device 2.

The state detector 26 may acquire, at predetermined interval(s), the position of the vehicle body 3 (position of the working vehicle 1) detected by the position detector 24 to detect (calculate) the position of the working device 2 from the detected position of the vehicle body 3, or detect a change in (movement of) the position of the vehicle body 3. The state detector 26 may detect the travel speed of the vehicle body 3 from the change in the position of the vehicle body 3. For another example, rotation speed sensor(s) to detect the rotation speed of the front wheels 7F and/or the rear wheels 7R of the traveling device 7 or the rotation speed of travel motor(s) to rotate the front wheels 7F and/or the rear wheels 7R may be provided, and the state detector 26 may detect the travel speed of the vehicle body 3 based on an output signal output from the rotation speed sensor(s). The state detector 26 may include a speed meter and acquire the travel speed of the vehicle body 3 measured by the speed meter. The state detector 26 may detect acceleration from a speed change per unit time. The state detector 26 may include an acceleration meter and acquire the acceleration of the vehicle body 3 measured by the acceleration meter.

The state detector 26 generates detection information indicating the detected operating status of the working vehicle 1 and working device 2, and outputs the detection information to the second controller 21. For example, the detection information from the state detector 26 includes manipulation information relating to the working vehicle 1 and the working device 2. The manipulation information includes, for example, information relating to the speed of the working vehicle 1, the acceleration of the working vehicle 1, the shift position of the transmission 5, the brake position of the brake 13, and the operation position of the working device 2.

The position detector 24 and the state detector 26 continuously output the detection information indicating the results detected at predetermined interval(s) or predetermined point(s) in time to the second controller 21. The sensing assembly 25 continuously outputs the sensing information indicating the results of sensing at predetermined interval(s) or predetermined point(s) in time to the second controller 21. The second controller 21 causes the internal memory 21b to store the detection information input from the position detector 24 and the state detector 26 and the sensing information input from the sensing assembly 25. The second controller 21 continuously transmits the detection information and the sensing information stored in the internal memory 21b to the remote device 30 via the second communicator 23 at predetermined interval(s) or predetermined point(s) in time in the case of the remote operation.

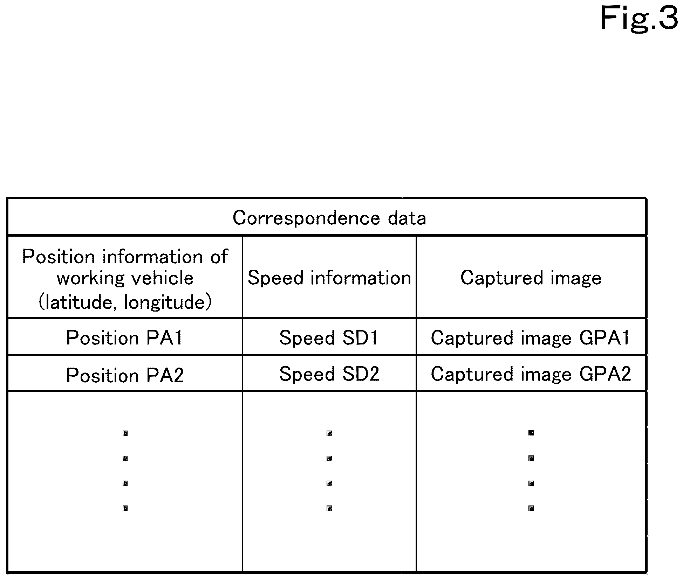

The detection information and the sensing information transmitted from the working vehicle 1 as such includes correspondence data in which the position information and speed information relating to the working vehicle 1 and the captured image of an area in the direction of travel of the working vehicle 1 are associated with each other (see FIG. 3). FIG. 3 illustrates an example of the correspondence data. In other words, the correspondence data in which the detection information from the position detector 24 (that is, the position information relating to the working vehicle 1), the speed information relating to the working vehicle 1 detected by the state detector 26, and the sensing information from the sensing assembly 25 (for example, the image captured by the internal camera 25c1) are associated with each other is continuously transmitted to the remote device 30. As shown in FIG. 3, the correspondence data in which a position PA1 of the working vehicle 1, a speed SD1 of the working vehicle 1 and a captured image GPA1 captured by a camera 25c are associated with each other is sent to the remote device 30. Furthermore, the correspondence data in which a position PA2 of the working vehicle 1, a speed SD2 of the working vehicle 1 and a captured image GPA2 captured by the camera 25c are associated with each other is sent to the remote device 30. With regard to the captured image, as shown in FIG. 3, pieces of correspondence data in each of which a front captured image in the case of forward travel (a rear captured image in the case of rearward travel), speed information relating to the working vehicle 1, and position information relating to the working vehicle 1 are associated with each other are continuously sent to the remote device 30.

The actuator group 27 includes electric or hydraulic motor(s), cylinder(s), control valve(s) and the like to actuate devices such as the prime mover 4, the traveling device 7, the transmission 5, the brake 13 and the linkage 8 of the working vehicle 1. The manipulator 11 includes a steering wheel 11a (FIG. 2), an accelerator pedal, a brake pedal, a shift lever 11d (FIG. 1) and the like. The second controller 21 actuates corresponding actuator(s) included in the actuator group 27 according to the operation state of the manipulator 11 to drive the prime mover 4, the traveling device 7, the transmission 5, the brake 13 and/or the steering device 14 to control the travel and steering of the working vehicle 1.

The second controller 21 communicates with a controller 2a of the working device 2 to cause the controller 2a to control the operation of the working device 2. In other words, the second controller 21 controls the operations of the working device 2 via the controller 2a to perform work for an agricultural field. For example, the controller 2a includes a CPU, a memory and/or the like. It is noted that some working devices 2 may not include the controller 2a. In this case, the second controller 21 controls the posture of the working device 2 via the linkage 8 to cause the working device 2 to perform work for an agricultural field.

The second controller 21 controls the travel of the working vehicle 1, work performed by the working device 2, and other operations performed by the working vehicle 1 based on the sensing information from the sensing assembly 25, the detection information from the state detector 26, the detection information from the position detector 24, and/or the like. In the case where the second controller 21 has received remote manipulation information (remote manipulation signal) transmitted from the remote device 30 via the second communicator 23, the second controller 21 controls the travel of the working vehicle 1, work performed by the working device 2, and other operations performed by the working vehicle 1 based on the remote manipulation information in addition to the above-mentioned information.

Furthermore, when controlling the travel of the working vehicle 1 or work performed by the working device 2, the second controller 21 determines, based on the detection information from the object detectors 25d, whether or not an object is at less than a predetermined distance from the working vehicle 1 or the working device 2 and may contact the working vehicle 1 and the working device 2. Then, the second controller 21, upon determining that an object is at less than a predetermined distance from the working vehicle 1 or the working device 2 and may contact the working vehicle 1 or the working device 2, controls the traveling device 7, the working device 2 and/or the like to stop the travel of the working vehicle 1 or work automatically and avoid the contact with the object.

The following discusses the electronic device 40. The electronic device 40 is an IC tag to be carried by a worker (operator) of the working vehicle 1. The electronic device 40 includes, as shown in FIG. 1, a third controller 41, a third communicator 42 and a third notifier 43.

The third controller 41 is an IC chip to perform integrated control of the electronic device 40, and controls the third communicator 42 and the third notifier 43.

The second communicator 23 of the working vehicle 1 and the third communicator 42 of the electronic device 40 include an interface for near field communication. Thus, the working vehicle 1 and the electronic device 40 are directly communicable with each other using near field wireless signals such as Bluetooth (registered trademark) Low Energy (BLE) signals or Ultra High Frequency (UHF) signals. In other words, the working vehicle 1 and the electronic device 40 are communicable with each other wirelessly.

The third notifier 43 is configured or programmed to provide various notifications to the worker. For example, the third notifier 43 includes a display 43a to provide notifications by displaying the notifications, a sound output interface 43b to provide notifications via sound, a vibration generator 43c to provide notifications via vibration, and/or the like. The display 43a is a small liquid-crystal display, an LED or the like to display or indicate information relating to various notifications. The sound output interface 43b is a small speaker or the like to output notification sounds relating to various notifications. The vibration generator 43c is operable to generate continuous or intermittent vibration. In the present embodiment, the third notifier 43 includes the display 43a, the sound output interface 43b and the vibration generator 43c. Note, however, that the third notifier 43 may include at least one of the above.

The electronic device 40 may include an operating button 44. The operating button 44 is a physical switch to accept the worker's operation. It is noted that the operating button 44 may be an icon button displayed on the display 43a (small liquid crystal display). The operating button 44 receives input of an instruction from the worker. The third controller 41 performs the control corresponding to the instruction input via the operating button 44.

For example, upon receipt of an instruction via a first operation of the operating button 44 (when the operating button 44 is pressed once), the third controller 41 of the electronic device 40 accepts the instruction as an instruction for manual manipulation, and, upon receipt of an instruction via a second operation of the operating button 44 (when the operating button 44 is pressed twice consecutively within a predetermined period), the third controller 41 of the electronic device 40 accepts the instruction as an instruction for repair. The third controller 41 of the electronic device 40 then sends it as information relating to the manual manipulation of the working vehicle 1 or information relating to the repair of the working vehicle 1 (including the working device 2) to the working vehicle 1. Upon receiving the above-mentioned information, the working vehicle 1 sends the information relating to manual manipulation or repair (for example, information about the manual manipulation or information about the repair) to the remote device 30. Note that the third controller 41 may be configured or programmed to, when the first operation is performed (when the operating button 44 is pressed once), send information relating to manual manipulation or repair to the working vehicle 1 without determining whether the operation is intended for manual manipulation or repair.

The following discusses the remote device 30. As shown in FIG. 1, the remote device 30 is provided at a distance from the working vehicle 1. The remote device 30 is configured to remotely manipulate the working vehicle 1 by a human remote manipulator (operator)'s manipulation, and monitor the status of the working vehicle 1, situations in the surrounding area of the working vehicle 1 and the like. The remote device 30 includes a first controller 31, a first storing device (memory and/or storage) 32, a first communicator 33, a manipulator 35, and a first notifier 36.

The first controller 31 includes a processor to control operations of elements of the remote device 30. The processor functions as the first controller 31 to control operations of elements of the remote device 30 by executing remote control program(s) stored in the first storing device 32, for example. An internal memory 32a provided in the first controller 31 is a volatile or nonvolatile memory. The internal memory 32a stores various information and data for the first controller 31 to control operations of elements of the remote device 30 in a read/write manner.

The first storing device 32 stores control programs such as remote control program(s) to remotely operate the working vehicle 1 and/or remote monitoring program(s) to remotely monitor the working vehicle 1, various data, and the like in advance. The first storing device 32 is, for example, a solid state drive (SSD), a hard disc drive (HDD) and/or the like.

The first communicator 33 includes an antenna, an IC, an electronic circuit and/or the like to perform communication wirelessly via a cellular phone network, the Internet, or a wireless LAN. The first communicator 33 communicates wirelessly with the working vehicle 1 under control of the first controller 31. The first communicator 33 receives various data (detection information from the position detector 24 and the state detector 26, the sensing information from the sensing assembly 25 and the like) transmitted from the second communicator 23. For example, the first communicator 33 receives the correspondence data in which the position information and speed information relating to the working vehicle 1 and the captured image of an area in the direction of travel of the working vehicle 1 are associated with each other.

The notifier 36 includes a display 34 and a speaker 36a. The speaker 36a outputs a notification sound to a human remote manipulator.

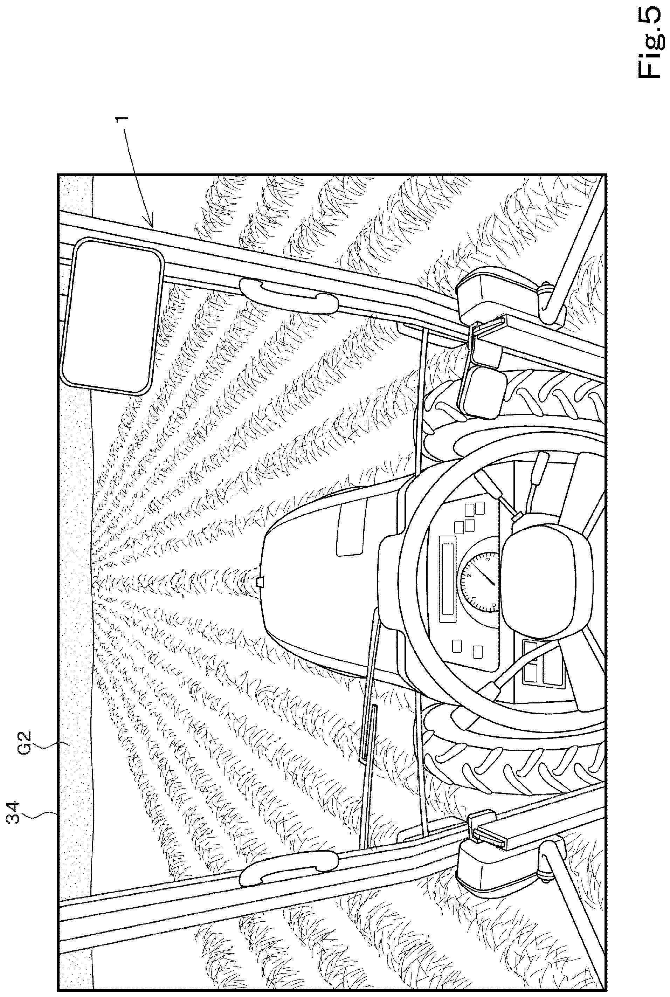

The display 34 is, for example, a liquid crystal display, an OLED display or the like. The display 34 displays information for remote operation of the working vehicle 1 by being controlled by the first controller 31 in terms of display. FIG. 5 illustrates an example of a remote operation screen G2. For example, the display 34 displays the remote operation screen G2 as shown in FIG. 5. The remote operation screen G2 displays a captured image captured by the internal camera 25c1 (see FIG. 5) when the working vehicle 1 is traveling forward, and displays a rear captured image captured by the rear camera 25c2 when the working vehicle 1 is traveling rearward. When the working vehicle 1 is in the stopped state, for example, at least one of the captured image captured by the internal camera 25c1 (see FIG. 5) or the rear captured image captured by the rear camera 25c2 is displayed on the remote operation screen G2. The display 34 includes a touch panel on the front side of the display screen and is operable to detect a touch on the display screen via the touch panel.

The manipulator 35 is configured to remotely manipulate the working vehicle 1. The remote manipulator 35 includes a steering wheel 35a, an accelerator pedal 35b, a brake pedal 35c and a shift lever 35d, which are provided in the vicinity of a human remote manipulator's seat. A human remote manipulator sits on the human remote manipulator's seat and operates the manipulator 35 to remotely manipulate the travel of the working vehicle 1 or work performed by working device 2. The human remote manipulator also monitors the working vehicle 1 and the situation in the surrounding area via the display 34. The human remote manipulator can input information or instructions into the remote device 30 by operating the manipulator 35. The manipulator 35 may be a touch pad, hardware switch(es) or the like.

Once the human remote manipulator has operated the manipulator 35 to input an instruction to actuate the working vehicle 1, the first controller 31 generates remote manipulation information corresponding to the instruction for the actuation and sends the remote manipulation information to the working vehicle 1 via the first communicator 33. That is, the remote manipulation information corresponding to the operation of the steering wheel 35a, the accelerator pedal 35b, the brake pedal 35c and/or the shift lever 35d is sent to the working vehicle 1. When the second controller 21 of the working vehicle 1 receives the remote manipulation information from the remote device 30 via the second communicator 23, the second controller 21 of the working vehicle 1 actuates elements of the working vehicle 1 based on the remote manipulation information, the detection information from the position detector 24, the sensing information from the sensing assembly 25 and the detection information from the state detector 26 to control travel and steering the working vehicle 1 and/or control the work performed by the working device 2.

The second controller 21 transmits the detection information from the position detector 24 and the state detector 26 and the sensing information from the sensing assembly 25 to the remote device 30 via the second communicator 23. When the first controller 31 of the remote device 30 receives the detection information from the position detector 24 and the state detector 26 and the sensing information from the sensing assembly 25 via the first communicator 33, the controller 31 of the remote device 30 causes the internal memory 32a to store such information and/or causes the display 34 to display such information.

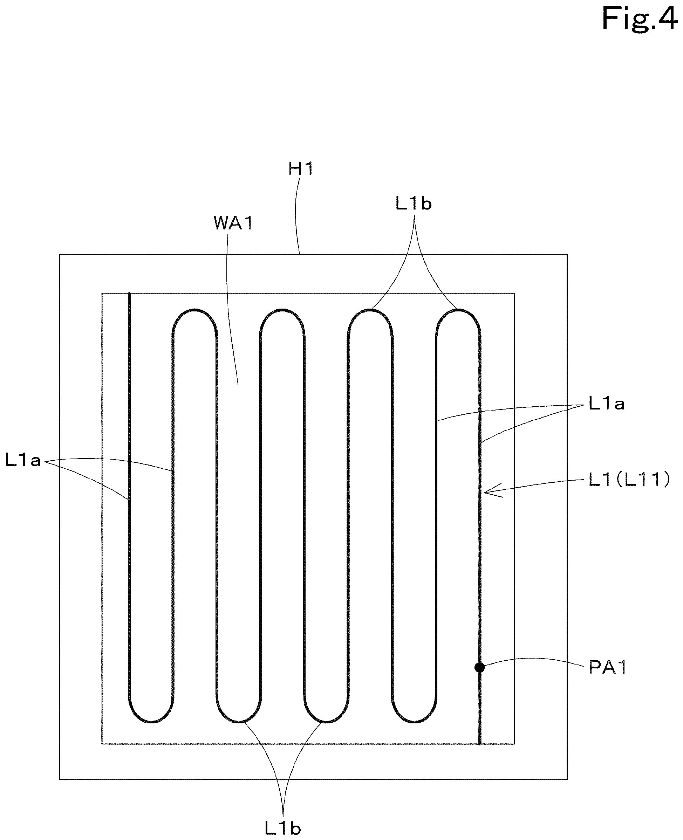

The following discusses a planned travel route L1 for the working vehicle 1 in detail. FIG. 4 illustrates an example of the planned travel route L1. The remote device 30 is operable to set (define) the planned travel route L1. For example, the first storing device 32 stores map information including an agricultural field H1 in advance. The remote device 30 may be configured to, when the map information including an agricultural field H1 is not stored in the first storing device 32, access a map server (not illustrated) to acquire the map information including the agricultural field H1 and store it in the first storing device 32. The first controller 31 is configured or programmed to read map information including the agricultural field H1 from the first storing device 32 and causes the display 34 to display the agricultural field H1 shown in FIG. 4 on the display screen. The planned travel route L1 can be set in advance in a work area WA1 of the agricultural field H1 as shown in FIG. 4 by touching (for example, performing touch input using a stylus on) the work area WA1 on the display screen of the display 34. The planned travel route L1 includes a plurality of straight route portions L1a and a plurality of semicircular turn route portions L1b each connecting ends of two adjacent straight route portions L1a. The set planned travel route L1 is registered in the first storing device 32.

Noe that the working vehicle 1 is also operable to set (define) the planned travel route L1 in advance. For example, the second controller 21 of the working vehicle 1 is configured or programmed to set the planned travel route L1 in the work area WA1 of the agricultural field H1 by a human operator entering the working vehicle 1 and actually driving the working vehicle 1 in the agricultural field H1. The remote device 30 may be operable to receive the planned travel route L1 from the working vehicle 1 and store it in the first storing device 32.

As shown in FIG. 1, the remote support system 100 includes notifier(s) ND. The notifier ND provides a notification indicating that the remote manipulation is to be performed when the working vehicle 1 receives the remote manipulation information sent from the remote device 30, and provides a notification indicating that manual manipulation or repair is to be performed when the remote device 30 receives information relating to manual manipulation or repair of the working vehicle 1. The notifier ND includes the first notifier 36 and the communication terminal(s) CT.

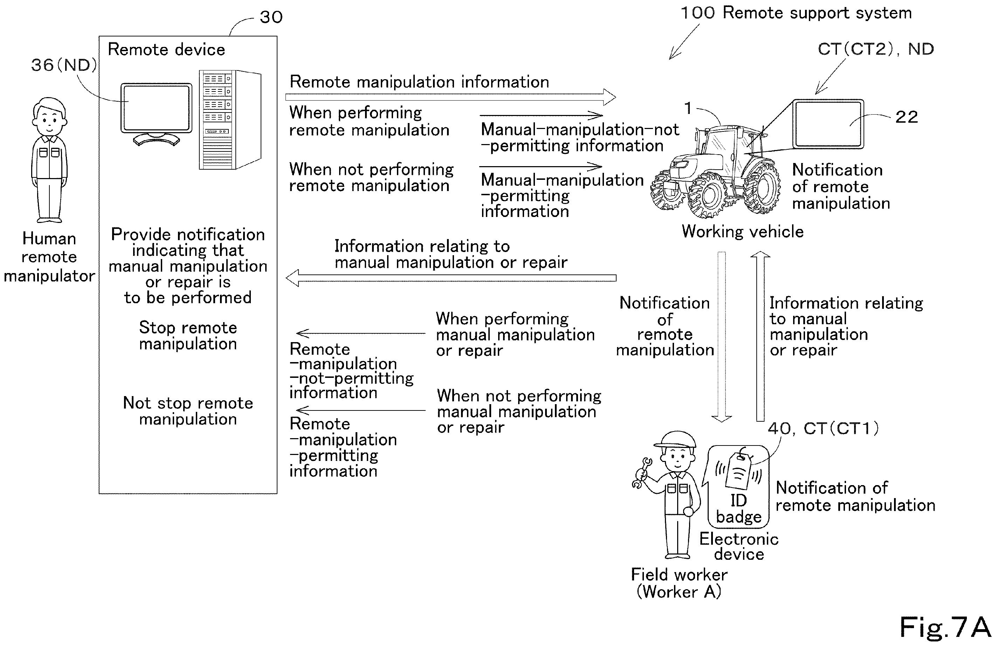

FIG. 7A illustrates a flow of a process in the remote support system 100. Specifically, the communication terminal(s) CT provide(s) a notification indicating that the remote manipulation is to be performed when the working vehicle 1 receives the remote manipulation information sent from the remote device 30. For example, the display 22 of the second terminal CT2 and the third notifier 43 of the first terminal CT1 provide a notification indicating that the remote manipulation is to be performed. The first notifier 36 of the remote device 30 provides a notification indicating that manual manipulation or repair is to be performed when the remote device 30 receives information relating to manual manipulation or repair of the working vehicle 1 from the first terminal CT1 or the second terminal CT2.

The communication terminal CT (first terminal CT1 or second terminal CT2) sends information indicating that the remote manipulation of the working vehicle 1 is impermissible to the remote device 30 when the manual manipulation or the repair is to be performed, and the communication terminal CT (first terminal CT1 or second terminal CT2) sends information indicating that the remote manipulation of the working vehicle 1 is permissible to the remote device 30 when the manual manipulation or the repair is not to be performed.

The remote device 30 stops the remote manipulation upon receiving the information indicating that the remote manipulation of the working vehicle 1 is impermissible (remote-manipulation-not-permitting information), and does not stop the remote manipulation upon receiving the information indicating that the remote manipulation of the working vehicle 1 is permissible (remote-manipulation-permitting information).

The remote device 30 sends information indicating that the manual manipulation or the repair is impermissible (manual-manipulation-not-permitting information) to the communication terminal CT when performing remote manipulation, and the remote device 30 sends information indicating that the manual manipulation or the repair is permissible (manual-manipulation-permitting information) to the communication terminal CT when not performing remote manipulation.

The second controller 21 actuates the working vehicle based on the manual manipulation when the communication terminal CT (at least the second terminal CT2) receives information indicating that the manual manipulation is permissible, and does not actuate the working vehicle 1 based on the manual manipulation when the communication terminal CT receives information indicating that the manual manipulation is impermissible.

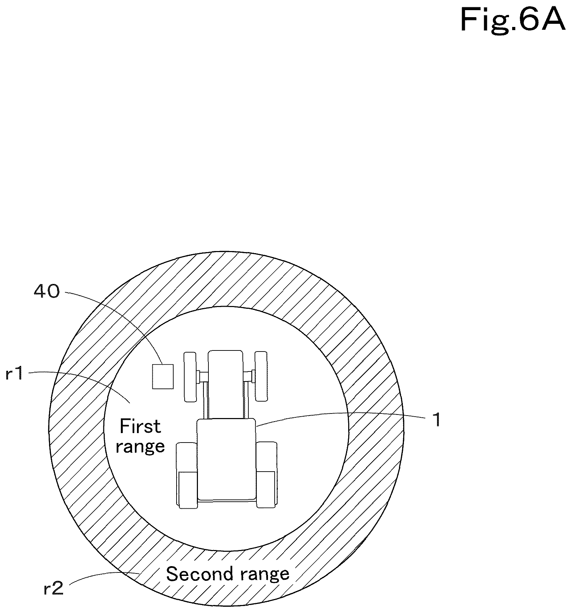

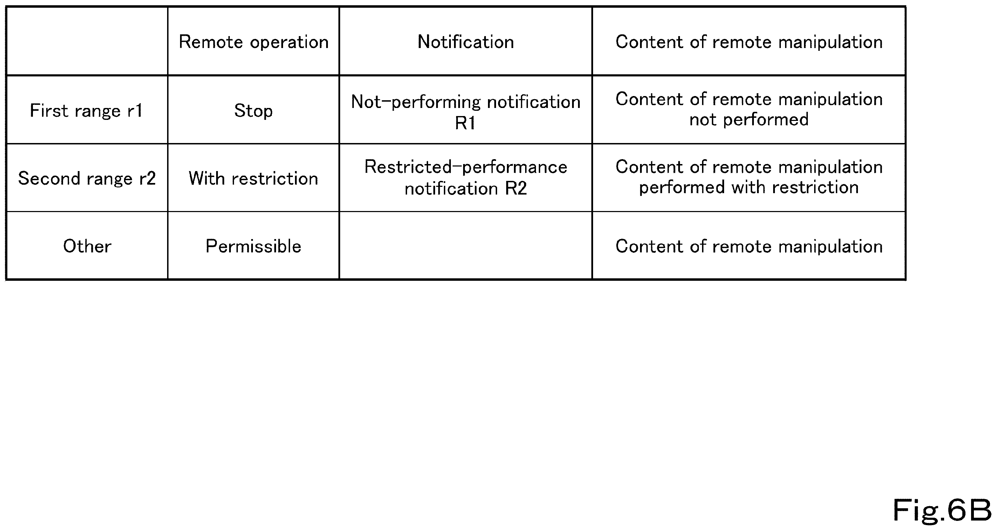

FIG. 6A illustrates an example of a first range r1 and a second range r2 from the working vehicle 1. The first range r1, which is, for example, in the form of a circle centered on the working vehicle 1, is defined within a predetermined first distance from the working vehicle 1. The second range r2 is defined outside the first range r1. The second range r2 is an annular range defined within a predetermined second distance from the working vehicle 1 and centered on the working vehicle 1, and does not include the first range r1. In FIG. 6A, the electronic device 40 is positioned within the first range r1. FIG. 6B indicates that the remote operation is to be stopped, restricted, etc., because of the positional relationship between the working vehicle 1 and the electronic device 40. As shown in FIG. 6B, the remote operation is stopped when the electronic device 40 is within the first range r1, the remote operation is performed with restriction when the electronic device 40 is within the second range r2, and the remote operation is permitted when the electronic device 40 is outside the second range r2.

It is noted that the center of the first range r1 and the second range r2 is not limited to the center of the working vehicle 1. For example, the center of the working vehicle 1 may be changed depending on whether or not the working device 2 is connected to the linkage 8, and/or the type of the working device 2. For example, when the working device 2 is attached to the linkage 8, the center of the entire working vehicle 1 having the working device 2 connected thereto may be the center of the first range r1 and the second range r2. The first range r1 and the second range r2 may each be defined by an outline at a predetermined distance from the outline of the entire working vehicle 1 having the working device 2 connected thereto.

The remote device 30 sends a not-performing notification R1 indicating that the remote manipulation is not to be performed to the communication terminal CT, and the communication terminal CT provides a notification of the not-performing notification R1.

The second controller 21 determines that the remote manipulation based on the remote manipulation information is not permitted when the position indicated by the position information relating to the first terminal CT1 is within the first range r1 from the working vehicle 1, and determines that the remote manipulation of the working vehicle 1 is permitted when the position indicated by the position information relating to the first terminal CT1 is outside the first range r1.

The first notifier 36 provides a notification indicating at least one of (i) whether or not the first terminal CT1 is positioned within the first range r1 from the working vehicle 1 or (ii) the distance between the working vehicle 1 and the first terminal CT1.

The remote device 30, when the electronic device 40 is positioned within the first range r1, sends the not-performing notification R1 and a notification of the content of the remote manipulation not performed and indicated by the remote manipulation information to the communication terminal CT as shown in FIG. 6B. The second controller 21 sends the not-performing notification R1 and the notification of the content of the remote manipulation not performed to the communication terminal CT. The communication terminal CT provides a notification indicating that the remote manipulation of the working vehicle 1 was not permitted and the content of the remote manipulation not performed.

The first notifier 36, when the first terminal CT1 is positioned within the second range r2 defined outside the first range r1, performs the remote manipulation based on the remote manipulation information with restriction and sends a restricted-performance notification R2 indicating that the remote manipulation is to be performed with restriction to the first terminal CT1. The first terminal CT1 provides a notification indicating that the remote manipulation of the working vehicle 1 is to be performed with restriction and the content of the remote manipulation indicated by the remote manipulation information.

The remote support system 100 is operable to provide a notification of prevention of the remote operation. In the remote support system 100, the remote operation of the working vehicle 1 is stopped when a worker is present in the vicinity of the working vehicle 1 (working machine) remotely operated. The remote support system 100 not only prevents the remote operation of the working vehicle 1 but also provides a notification indicating that the remote operation was prevented in advance to the worker in the vicinity of the working vehicle 1.

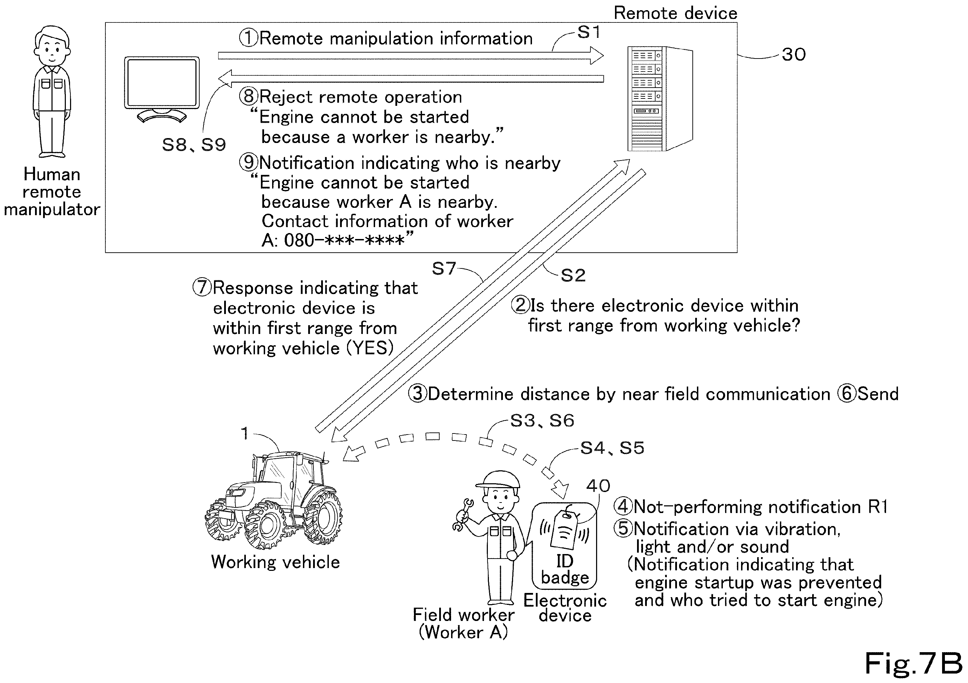

Fig. 7B illustrates a flow of a process in the remote support system 100. When there is a remote manipulation signal from a human remote manipulator (S1), the remote device 30 asks the working vehicle 1 whether or not the electronic device 40 is positioned within the first range r1 from the working vehicle 1 (S2). The working vehicle 1 performs a near field communication with the electronic device 40 (S3), and determines whether or not the electronic device 40 is within the first range r1. The working vehicle 1, if the received signal strength of the signal from the electronic device 40 is a first threshold value or above, determines that the electronic device 40 is within the first range r1 and sends the not-performing notification R1 to the electronic device 40 (S4). The working vehicle 1 may be operable to determine the distance to the electronic device 40 based on the received signal strength of the signal from the electronic device 40. The electronic device 40, upon receiving the not-performing notification R1, provides a notification indicating that the remote operation was not permitted by the working vehicle 1 (S5), and sends worker information stored in the electronic device 40 to the working vehicle 1 (S6). The working vehicle 1 sends information indicating whether or not the electronic device 40 is within the first range r1 to the remote device 30 (S6). The working vehicle 1 sends the worker information to the remote device 30 if it has received the worker information. Assume here that information indicating that the electronic device 40 is within the first range r1 and the worker information are sent. The remote device 30 rejects the remote operation (S7) and provides a notification indicating who is present based on the worker information (S8).

The working vehicle 1 includes the second communicator 23 to communicate with the electronic device 40, and the second controller 21 configured or programmed to not perform the remote manipulation based on the remote manipulation information and send the not-performing notification R1 indicating that the remote operation is not performed to the electronic device 40 via the second communicator 23 when the electronic device 40 is positioned within the first range r1 from the working vehicle 1.

The electronic device 40 includes the third communicator 42 to receive the not-performing notification R1 from the working vehicle 1, and the third notifier 43 to provide a notification indicating that the remote operation based on the remote manipulation information was not performed by the working vehicle 1 based on the not-performing notification R1 received by the third communicator 42.

Specifically, the first communicator 33 of the remote device 30 sends the remote manipulation information to the working vehicle 1. The second communicator 23 sends information relating to the electronic device 40 to the remote device 30, and sends the not-performing notification R1 to the electronic device 40.

When the second communicator 23 receives the remote manipulation information, the second controller 21 sends the position information indicating the position of the electronic device 40 relative to the working vehicle 1 as information relating to the electronic device 40 to the remote device 30 via the second communicator 23. The first controller 31 determines that the remote operation of the working vehicle 1 is impermissible if the position indicated by the position information is within the first range r1, and determines that the remote operation of the working vehicle 1 is permissible if the position indicated by the position information is outside the first range r1.

The first controller 31, upon determining that the remote operation of the working vehicle 1 is permissible, sends a start signal to start the remote operation of the working vehicle 1 to the working vehicle 1 via the first communicator 33, and upon determining that the remote operation of the working vehicle 1 is impermissible, sends a stop signal to stop the remote operation of the working vehicle 1 to the working vehicle 1 via the first communicator 33.

The remote device 30 includes the first notifier 36 to provide notifications to a human remote manipulator. The first controller 31 provides, based on the position information, a notification indicating at least one of (i) whether or not the electronic device 40 is positioned within the first range r1 of the working vehicle 1 or (ii) the distance between the working vehicle 1 and the electronic device 40, via the first notifier 36.

The second controller 21 sends the not-performing notification R1 and a notification of the content of the remote manipulation not performed and indicated by the remote manipulation information to the electronic device 40 via the second communicator 23. The third notifier 43 provides a notification indicating that the remote operation of the working vehicle 1 was not performed and the content of the remote manipulation not performed.

The second controller 21, when the electronic device 40 is positioned within the second range r2 defined outside the first range r1, performs the remote operation based on the remote manipulation information with restriction and sends a restricted-performance notification R2 indicating that the remote operation is performed with restriction to the electronic device 40 via the second communicator 23. The third notifier 43 provides a notification indicating that the remote operation of the working vehicle 1 is performed with restriction and the content of the remote manipulation indicated by the remote manipulation information.

The second controller 21 communicates with the electronic device 40 to acquire worker information indicating a worker carrying the electronic device 40 and sends the worker information and position information to the remote device 30 via the second communicator 23. The electronic device 40 stores the worker information relating to the worker carrying the electronic device 40 in advance. The worker information includes, for example, the name of the worker, the department of the worker and the like. The first controller 31 provides a notification of the worker information and the position information received by the first communicator 33 via the first notifier 36.

The worker information includes contact information indicating contact details of the worker carrying the electronic device 40. The contact information includes, for example, information such as the phone number of the cellular phone of the worker and/or an email address of the worker. The first controller 31 makes contact using the contact details indicated by the contact information upon receiving a contact instruction from a human remote manipulator.

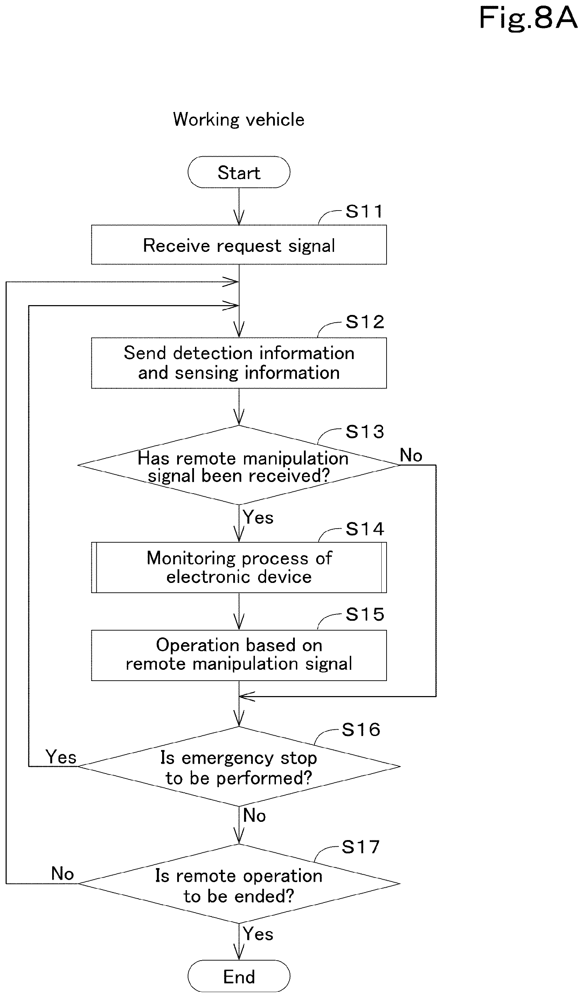

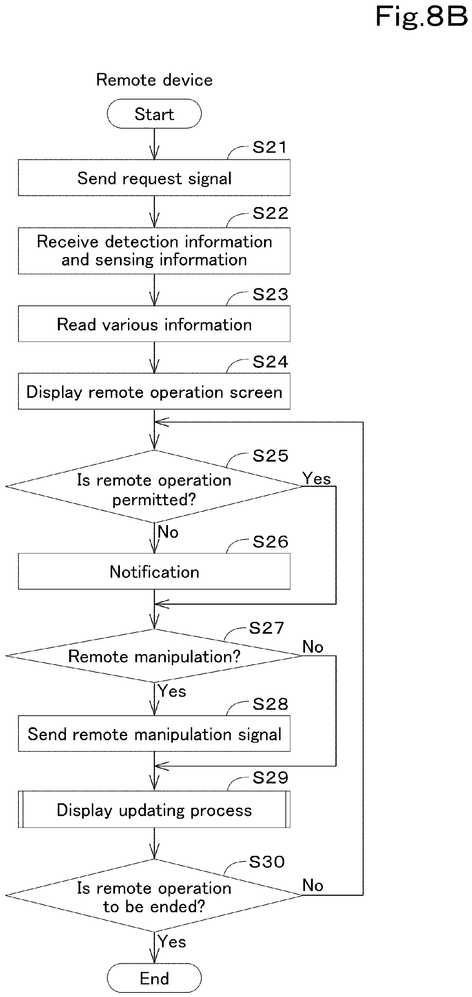

The following discusses the process to remotely manipulate the working vehicle 1 while monitoring whether or not the electronic device 40 is present in the vicinity of the working vehicle 1 with reference to FIG. 8A and 8B. FIG. 8A is a flowchart showing the operation of the working vehicle 1 remotely operated. FIG. 8B is a flowchart showing the operation of the remote device 30 remotely manipulating the working vehicle 1.

As shown in FIG. 8B, upon receiving a request to start the remote manipulation from a human remote manipulator, the first controller 31 sends a request signal to request information detected by the working vehicle 1 to the working vehicle 1 via the first communicator 33 (S21).

As shown in FIG. 8A, the second controller 21 of the working vehicle 1, upon receiving the request signal from the remote device 30 via the second communicator 23 (S11), sends the detection information from the position detector 24 and the state detector 26 and sensing information from the sensing assembly 25 to the remote device 30 via the second communicator 23 (S12). As described earlier, the detection information from the state detector 26 includes manipulation information relating to the working vehicle 1 and the working device 2 (information relating to at least one of the speed (or acceleration) of the working vehicle 1, the shift position of the transmission 5, the braking position of the brake 13 or the operating position of the working device 2).

Referring back to FIG. 8B, the first controller 31 of the remote device 30, upon receiving the detection information from the position detector 24 and the state detector 26 and the sensing information from the sensing assembly 25 via the first communicator 33 (S22), causes the first storing device 32 to store such information. The first controller 31 reads, into the internal memory 32a, the detection information from the position detector 24 and the state detector 26 and the sensing information from the sensing assembly 25, device information indicating specifications of the working vehicle 1 and the working device 2, and map information about an area around the working vehicle 1 stored in the first storing device 32 (S23).

The first communicator 33 receives the device information indicating the specifications relating to the working vehicle 1 and the working device 2, which is then stored in the first storing device 32. The first storing device 32 stores, in advance, the map information relating to the area where the working vehicle 1 is positioned. The first controller 31 extracts the position of the working vehicle 1 from the detection information from the position detector at S23, defines a range within a predetermined distance from the position of the working vehicle 1 as the surrounding area of the working vehicle 1, and reads the map information relating to the range from the first storing device 32 into the internal memory 32a. For another example, the first controller 31 may receive the map information relating to the range within a predetermined distance from the position of the working vehicle 1 at S23 from an external server via the first communicator 33 over the Internet or the like and read the received map information.

The first controller 31 then causes the display 34 to display the remote operation screen G2 based on the detection information from the position detector 24 and the state detector 26, the sensing information from the sensing assembly 25, the device information and the map information (S24).

Referring back to FIG. 8A, after S12, the second controller 21 determines whether or not there is remote manipulation information from the remote device 30 (S13). The second controller 21, when receiving the remote manipulation information from the remote device 30 via the second communicator 23 (S13: YES), performs a monitoring process of the electronic device 40 (S14).

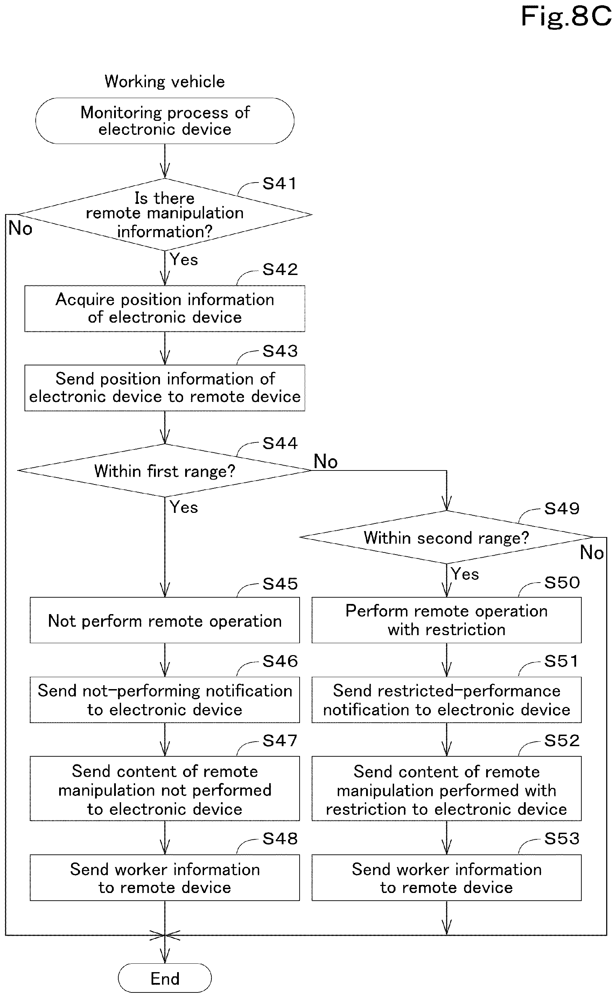

FIG. 8C is a flowchart showing an example of the monitoring process of the electronic device 40. The second controller 21 determines whether or not there is remote manipulation information from the remote device 30 (S41). If there is remote manipulation information from the remote device 30 (S41: YES), the second controller 21 acquires position information relating to the electronic device 40 (S42).

Specifically, the second communicator 23 receives a signal from the electronic device 40 by near field communication with the third communicator 42. The second controller 21 determines that an electronic device 40 is within the first range r1 when the received signal strength of a signal from the electronic device 40 is the first threshold value or above, determines that the electronic device 40 is within the second range r2 when the received signal strength is below the first threshold value and equal to or above the second threshold value, and determines that the electronic device 40 is outside the second range r2 when the received signal strength is below the second threshold value or the signal is not received.

The second controller 21 sends position information relating to the electronic device 40 to the remote device 30 via the second communicator 23 (S43). Examples of the position information relating to the electronic device 40 include the position information indicating that the electronic device 40 is within the first range r1, the position information indicating that the electronic device 40 is within the second range r2, and the position information indicating that the electronic device 40 is outside the second range r2.

When the electronic device 40 is within the first range r1 (S44: YES), the second controller 21 determines that the remote operation is not permitted (is not to be performed) (S45). The second communicator 23 is controlled by the second controller 21 to send the not-performing notification R1 to the electronic device 40 (S46) and send the content of the remote manipulation not performed (S47). For example, the second controller 21 is configured or programmed to recognize the content of the remote manipulation indicated by the remote manipulation information from the remote device 30, and therefore to determine the content of the remote manipulation not performed.

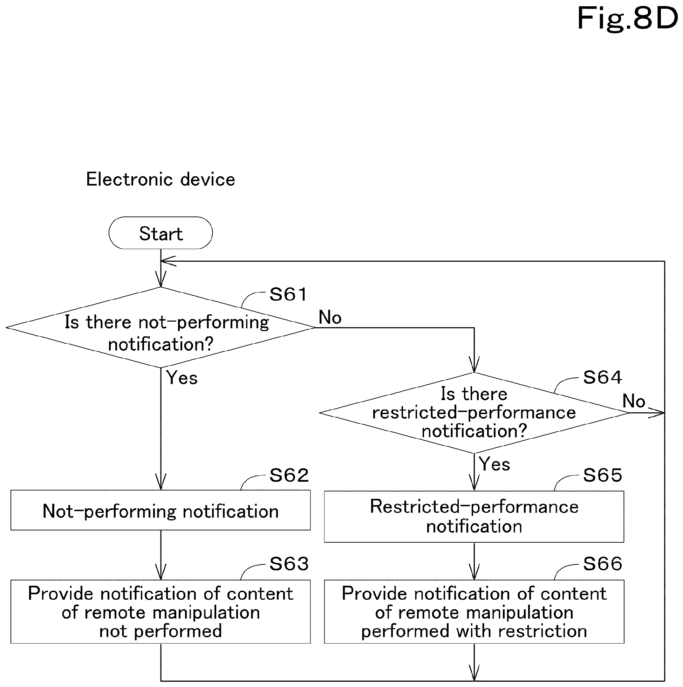

FIG. 8D is a flowchart showing an example of a notification process performed by the electronic device 40. The third controller 41 determines whether or not there is a not-performing notification R1 (S61). For example, when the third communicator 42 receives the not-performing notification R1, the third controller 41 determines there is the not-performing notification R1 (S61: YES) and the third notifier 43 provides a not-performing notification (S62). For example, the display 43a displays a screen and/or light indicating that the remote operation was not performed. The sound output interface 43b outputs a notification sound indicating that the remote operation was not performed. The vibration generator 43c generates vibrations in a vibration pattern indicating that the remote operation was not performed. The third notifier 43 provides a notification of the content of the remote manipulation not performed (S63). For example, when the content of the remote manipulation not performed is a startup of the prime mover 4 (engine) of the working vehicle 1, the third notifier 43 provides a notification indicating that the startup of the prime mover 4 was not performed.

Referring back to FIG. 8C, at S48, the second controller 21 receives worker information (for example, the name or contact details of a worker) from the electronic device 40 via the second communicator 23, and sends the worker information (for example, the name or contact details of the worker) to the remote device 30 via the second communicator 23 (S48).

On the other hand, at S44, the second controller 21, when the electronic device 40 is not within the first range r1 (S44: NO) and the electronic device 40 is within the second range r2 (S49: YES), performs the remote operation with restriction (S50). For example, the second controller 21 restricts the vehicle speed to the extent that the vehicle can safely stop before reaching the electronic device 40 (for example, to the vehicle speed calculated from the braking distance and the brake reaction distance), imposes a restriction such that the vehicle is allowed to move from the current position to the outline of the first range r1 but is not allowed to move out across the outline, and/or restricts the operation of the working device 2. The second communicator 23 is then controlled by the second controller 21 to send the restricted-performance notification R2 to the electronic device 40 (S51) and send the content of the remote manipulation performed with restriction (S52). For example, the second controller 21 is configured or programmed to recognize the content of the remote manipulation indicated by the remote manipulation information from the remote device 30, and therefore to determine the content of the remote manipulation performed with restriction.

Referring back to S61 in FIG. 8D, when the third controller 41 has not received the not-performing notification R1, the third controller 41 determines whether or not the third controller 41 has received the restricted-performance notification R2 (S64). For example, the third controller 41, when the third communicator 42 has received the restricted-performance notification R2, determines that there is the restricted-performance notification R2 (S64: YES), and the third notifier 43 provides a notification of restricted performance (S65). For example, the display 43a displays a screen and/or light indicating that the remote operation was performed with restriction. The sound output interface 43b outputs a notification sound indicating that the remote operation was performed with restriction. The vibration generator 43c generates vibration in a vibration pattern indicating that the remote operation was performed with restriction. The third notifier 43 provides a notification of the content of the remote manipulation performed with restriction (S66). For example, when the content of the remote manipulation performed with restriction is to move the working vehicle 1 at a first travel speed, the third notifier 43 provides a notification of the restricted performance indicating that the speed was restricted to a second travel speed slower than the first travel speed. On the other hand, after S63, after S66, or when the restricted-performance notification R2 is not received at S64 (S64: NO), the third controller 41 returns to S61.

Referring back to FIG. 8A, after S14, the second controller 21 controls the travel of the working vehicle 1, work performed by the working device 2, and the other operations of the working vehicle 1 based on the sensing information from the sensing assembly 25, the detection information from the state detector 26, the detection information from the position detector 24, and the remote manipulation information (S15). The working vehicle 1 is actuated according to the remote manipulation information from the remote device 30. In other words, the second controller 21 actuates the steering wheel 11a (FIG. 2), the accelerator pedal, the brake pedal, the shift lever 11d and/or the like of the manipulator 11 in accordance with operation signals corresponding to the operation of the steering wheel 35a, the accelerator pedal 35b, the brake pedal 35c and/or the shift lever 35d by a human remote manipulator.

Referring back to FIG. 8A, the second controller 21 defines a region within a predetermined distance from the working vehicle 1 in the direction of travel of the working vehicle 1 as an emergency stop region. Thus, the second controller 21, when an obstacle is detected in the emergency stop region based on the sensing information from the sensing assembly 25 when the working vehicle 1 is remotely operated by the remote device 30 to travel, causes the working vehicle 1 to perform an emergency stop automatically to avoid the contact of the working vehicle 1 with the obstacle (YES at S16), and returns to S12.

On the other hand, the second controller 21, when no obstacles are detected in the emergency stop region (NO at S16), that is, when no obstacles are present within the emergency stop region, determines whether or not the remote operation is to end (S17). The second controller 21, for example, when receiving an end signal for the remote operation from the remote device 30 (YES at S17), ends the remote operation. On the other hand, the second controller 21, when not receiving the end signal for the remote operation from the remote device 30 (NO at S17), returns to S12.

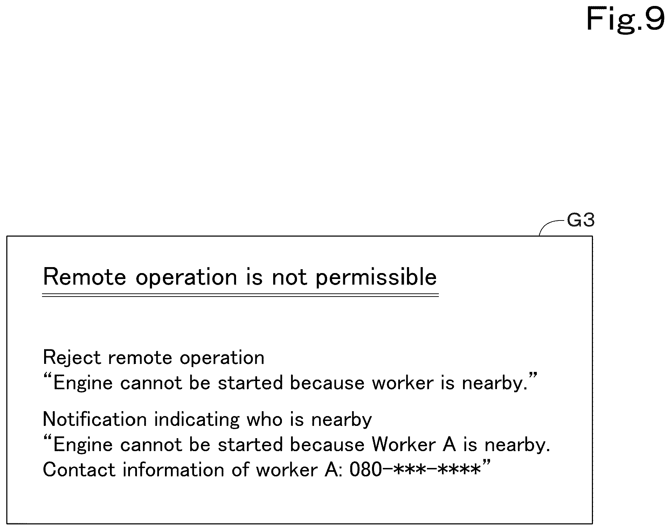

Referring back to FIG. 8B, the first controller 31 determines whether or not the remote operation is permitted (S25). For example, the first controller 31, when receiving information indicating that the electronic device 40 is within the first range r1 from the working vehicle 1, determines that the remote operation is not permitted (S25: NO) and the first notifier 36 or the display 34 provides a notification of such (S26). For example, the display 34 displays a notification screen G3 shown in FIG. 9. FIG. 9 illustrates an example of the notification screen G3 when the remote operation is not permitted. The notification screen G3 displays an indication that the remote operation is rejected, a message indicating the reason therefor "The engine cannot be started because a worker is nearby.", and a message indicating information relating to the nearby worker (for example, worker A) and their contact information (for example, worker A's cellular phone number).

On the other hand, the first controller 31, when the remote operation is permitted (S25: YES), determines whether or not the manipulator 35 is operated to perform manipulation (S27). The first controller 31, when the manipulator 35 is operated to perform manipulation (S27: YES), sends remote manipulation information corresponding to the operation of the manipulator 35 to the working vehicle 1 via the first communicator 33 (S28). For example, the remote manipulation information including operation signals corresponding to the operation of the steering wheel 35a, the accelerator pedal 35b, the brake pedal 35c and/or the shift lever 35d by the human remote manipulator is sent to the working vehicle 1 from the remote device 30.

On the other hand, after S28 or when the manipulator 35 is not operated to perform manipulation (S27: NO), the first controller 31 of the remote device 30 proceeds to a display updating process (S29).

The first controller 31 performs the display updating process (S29). That is, the first controller 31 performs the display updating process upon each receipt of correspondence data from the working vehicle 1 during the remote operation.

Specifically, the first communicator 33 of the remote device 30 receives pieces of detection information from the position detector 24 and the state detector 26 and pieces of sensing information from the sensing assembly 25 from the working vehicle 1 continuously. The first communicator 33 continuously receives pieces of correspondence data included in the pieces of detection information (that is, the correspondence data in which a captured image captured by the internal camera 25c1, the speed information relating to the working vehicle 1 detected by the state detector 26, and position information relating to the working vehicle 1 detected by the position detector 24 are associated with each other) and performs the display updating process.

The first controller 31 determines whether or not the remote operation is to end (S30). For example, the first controller 31, when not instructed to end the remote operation from the human remote manipulator (S30: NO), returns to S27. On the other hand, the first controller 31, when instructed to end the remote operation (S30: YES), ends the remote operation.

Main characteristic features of and effects achieved by the remote support system 100 in the above-described example embodiments and the like are as follows.

(Item A1) A remote support system 100 including a remote device 30 to remotely manipulate a working machine (working vehicle 1), a controller (second controller 21) provided in or on the working machine and configured or programmed to control the working machine based on remote manipulation information relating to the remote manipulation from the remote device 30, and a notifier ND to provide a notification indicating that the remote manipulation is to be performed when the working machine receives the remote manipulation information sent from the remote device 30 and provide a notification indicating that manual manipulation or repair is to be performed when the remote device 30 receives information relating to the manual manipulation or the repair of the working machine.

According to item A1, the notifier ND provides a notification indicating that the remote manipulation is to be performed when the working machine (working vehicle 1) receives the remote manipulation information from the remote device 30, and therefore the notifier ND is able to provide a worker (operator) of the working vehicle 1 with a notification indicating that the remote manipulation of the working machine 1 is to be performed. This allows the worker to know such and to immediately leave the working vehicle 1, making it possible to make the working vehicle 1 available for remote manipulation. The notifier ND also provides a notification indicating that manual manipulation or repair is to be performed when the remote device 30 receives information relating to the manual manipulation or the repair of the working vehicle 1, and therefore the notifier ND is able to provide a human remote manipulator with a notification indicating that the manual manipulation or the repair is to be performed by a worker. This makes it possible to provide support for smooth remote manipulation of the working vehicle 1 performed by the human remote manipulator and smooth manual manipulation or repair of the working vehicle 1 performed by the worker.

(Item A2) The remote support system 100 according to item A1, further including a communication terminal CT to send information indicating that the remote manipulation of the working machine (working vehicle 1) is not permitted to the remote device 30 when the manual manipulation or the repair is to be performed, and send information indicating that the remote manipulation of the working machine is permitted to the remote device 30 when the manual manipulation or the repair is not to be performed.

According to item A2, the communication terminal CT is operable to provide information indicating whether or not the remote manipulation is permitted to the remote device 30. Thus, the remote device 30 is able to know whether or not the manual manipulation or the repair of the working machine (working vehicle 1) is to be performed based on the information relating to whether or not the remote manipulation is permitted from the communication terminal CT. That is, the remote device 30 is able to determine that the manual manipulation or the repair of the working vehicle 1 is to be performed if information indicating that the remote manipulation is not permitted is received, and determine that the manual manipulation or the repair of the working vehicle 1 is not to be performed if information indicating that the remote manipulation is permitted is received.

(Item A3) The remote support system 100 according to item A2, wherein the remote device 30 is operable to stop the remote manipulation upon receiving the information indicating that the remote manipulation of the working machine (working vehicle 1) is not permitted, and not stop the remote manipulation upon receiving the information indicating that the remote manipulation of the working machine is permitted.

According to item A3, the remote device 30 is able to stop or continue the remote manipulation reliably depending on whether or not the manual manipulation or the repair of the working machine (working vehicle 1) is to be performed.

(Item A4) The remote support system 100 according to items A2 or A3, wherein the remote device 30 is operable to send information indicating that the manual manipulation or the repair is not permitted to the communication terminal CT when performing the remote manipulation, and send information indicating that the manual manipulation or the repair is permitted to the communication terminal CT when not performing the remote manipulation.

According to item A4, the remote device 30 is able to send information indicating whether or not the manual manipulation or the repair of the working machine (working vehicle 1) is permitted to the communication terminal CT. That is, the remote device 30 is able to indicate that the manual manipulation or the repair of the working vehicle 1 is permitted because the remote manipulation is not to be performed, or indicate that the manual manipulation or the repair of the working vehicle 1 is not permitted because the remote manipulation is to be performed.

(Item A5) The remote support system 100 according to item A4, wherein the controller (second controller 21) is configured or programmed to actuate the working machine (working vehicle 1) based on the manual manipulation when the communication terminal CT receives the information indicating that the manual manipulation is permitted, and not actuate the working machine based on the manual manipulation when the communication terminal CT receives the information indicating that the manual manipulation is not permitted.

According to item A5, it is possible to make the working machine (working vehicle 1) available for manual manipulation (in other words, unavailable for remote manipulation), allowing the worker to safely and reliably perform the manual manipulation of the working vehicle 1. Furthermore, it is possible to make the working vehicle 1 unavailable for manual manipulation (in other words, available for remote manipulation), thus prohibiting the manual manipulation by the worker and making it possible to suitably perform the remote manipulation of the working vehicle 1.

(Item A6) The remote support system 100 according to item A5, wherein the remote device 30 is operable to send a not-performing notification R1 indicating that the remote manipulation is not to be performed to the communication terminal CT, and the communication terminal CT is operable to provide a notification of the not-performing notification.

According to item A6, the communication terminal CT provides the not-performing notification R1, and therefore is able to let the worker (operator) of the working machine (working vehicle 1) know that the remote manipulation is not to be performed. The worker can safely perform the manual manipulation or the repair of the working vehicle 1.

(Item A7) The remote support system 100 according to item A6, wherein the communication terminal CT includes a first terminal CT1 to be carried by a worker, and the controller (second controller 21) is configured or programmed to determine that the remote manipulation based on the remote manipulation information is impermissible if a position indicated by position information relating to the first terminal CT1 is within a first range r1 from the working machine (working vehicle 1), and determine that the remote manipulation of the working vehicle 1 is permissible if the position is outside the first range r1.

According to item A7, when the first terminal CT1 is within the first range r1 from the working machine (working vehicle 1), in other words, when the worker is within the first range r1 from the working vehicle 1, the remote manipulation is not permitted, making it possible to secure the safety of the worker near the working vehicle 1. On the other hand, when the worker is outside the first range r1 from the working vehicle 1, the remote manipulation is permitted, making it possible to ensure the remote manipulation.

(Item A8) The remote support system 100 according to item A7, wherein the notifier ND includes a first notifier 36 provided in or on the remote device 30, and the first notifier 36 is configured or programmed to provide a notification of at least one of (i) whether or not the first terminal CT1 is positioned within the first range r1 from the working machine (working vehicle 1) or (ii) a distance between the working vehicle 1 and the first terminal CT1.

According to item A8, the human remote manipulator can know at least one of (i) whether or not the first terminal CT1 is positioned within the first range r1 from the working machine (working vehicle 1) or (ii) the distance between the working vehicle 1 and the first terminal CT1, i.e., know the positional relationship between the working vehicle 1 and the first terminal CT1, and therefore the remote manipulation can be performed while securing the safety of the worker.

(Item A9) The remote support system 100 according to item A6, wherein the remote device 30 is operable to send, to the communication terminal CT, the not-performing notification R1 and a notification of content of the remote manipulation not performed and indicated by the remote manipulation information, the controller (second controller 21) is configured or programmed to send, to the communication terminal CT, the not-performing notification R1 and the notification of the content of the remote manipulation not performed, and the communication terminal CT is operable to provide a notification indicating that the remote manipulation of the working machine (working vehicle 1) was not performed and the content of the remote manipulation not performed.

According to item A9, the communication terminal CT provides a notification indicating that the remote manipulation of the working machine (working vehicle 1) was not performed and the content of the remote manipulation of the working vehicle 1 not performed. Thus, the worker can know that the remote manipulation was not performed and the content of the remote manipulation not performed. That is, the worker can know the human remote manipulator's intention relating to the remote manipulation.

(Item A10) The remote support system 100 according to item A7, wherein the controller (second controller 21) is configured or programmed to perform the remote manipulation based on the remote manipulation information with restriction and send a restricted-performance notification indicating that the remote manipulation is to be performed with restriction to the first terminal CT1 when the first terminal CT1 is positioned within a second range r2 defined outside the first range r1, and the first terminal CT1 is operable to provide a notification indicating that the remote manipulation of the working machine (working vehicle 1) is to be performed with restriction and content of the remote manipulation indicated by the remote manipulation information.

According to item A10, the first terminal CT1 provides a notification indicating that the remote manipulation of the working machine (working vehicle 1) is performed with restriction and the content of the remote manipulation of the working vehicle 1 performed with restriction. In other words, notifications indicating that the remote manipulation is performed with restriction and the content of the remote manipulation to be performed with restriction are provided to the worker carrying the first terminal CT1 within the second range r2 defined outside the first range r1 from the working vehicle 1. Thus, the worker in the vicinity of the working vehicle 1 can also know the content of the remote manipulation to be performed with restriction. That is, the worker within the second range r2 from the working vehicle 1 can know the human remote manipulator's intention relating to the remote manipulation.

(Item A11) The remote support system 100 according to item A8, wherein the controller (second controller 21) is configured or programmed to acquire worker information indicating a worker carrying the first terminal CT1 via communication with the first terminal CT1 and send the worker information and the position information to the remote device 30, and the first notifier 36 is configured or programmed to provide a notification of the worker information and the position information received by the remote device 30.

According to item A11, the controller (second controller 21) of the working vehicle 1 acquires the worker information indicating the worker carrying the first terminal CT1 via communication with the first terminal CT1 and sends the worker information and the position information to the remote device 30. The first notifier 36 provides a notification of the worker information and the position information received by the remote device 30. Thus, the human remote manipulator can know the worker relating to the remote manipulation not performed and the positional relationship between the worker and the working vehicle 1.

(Item A12) The remote support system 100 according to item A11, wherein the worker information includes contact information indicating a contact detail of the worker carrying the first terminal CT1 (electronic device 40), and the remote device 30 (first controller 31) is operable to make contact using the contact detail indicated by the contact information upon receiving a contact instruction from a human remote manipulator.

According to item A12, the human remote manipulator can contact a worker relating to the remote manipulation not performed. The human remote manipulator can instruct the worker to leave the working vehicle 1 and/or ask the worker about working situations or the like about the working vehicle 1, making it possible to easily and quickly decide a restart, a standby, a stop or the like of the remote operation.

The first notifier 36 includes the display 34 provided in or on the remote device 30 and provides a notification indicating that manual manipulation or repair is to be performed. The display 34 of the remote device 30 provides a notification indicating that manual manipulation or repair is performed when the remote device 30 receives information relating to the manual manipulation or the repair of the working vehicle 1. Thus, it is possible to let the human remote manipulator know that manual manipulation or repair is performed by a worker.

The second terminal CT2 is provided in or on the working vehicle 1 and provides a notification indicating that remote manipulation is to be performed. The second terminal CT2 of the working vehicle 1 is operable to let the worker of the working vehicle 1 know that the remote manipulation of the working vehicle 1 is to be performed.

From another point of view, it can be said that the remote support system 100 is configured as follows. The remote support system 100 includes the remote device 30, the working vehicle 1 (working machine) to be remotely operated by the remote device 30, and the electronic device 40 to be carried by a worker of the working vehicle 1. The remote device 30 includes the first communicator 33 to communicate with the working vehicle 1 and the first controller 31 to send the remote manipulation information to the working vehicle 1 via the first communicator 33. The working vehicle 1 includes the second communicator 23 to communicate with the electronic device 40, and the second controller 21 configured or programmed to, when the electronic device 40 is positioned within the first range r1 from the working vehicle 1, not perform the remote operation based on the remote manipulation information and send the not-performing notification R1 indicating that the remote operation is not performed to the electronic device 40 via the second communicator 23. The electronic device 40 includes the third communicator 42 to receive the not-performing notification R1 from the working vehicle 1, and the third notifier 43 to provide a notification indicating that the remote operation based on the remote manipulation information was not performed by the working vehicle 1 based on the not-performing notification R1 received by the third communicator 42.

With this configuration, the working vehicle 1 does not perform the remote operation even if receiving the remote manipulation information when the worker carrying the electronic device 40 is within the first range r1. Thus, the safety of the worker in the vicinity of the working vehicle 1 can be secured. Furthermore, the electronic device 40 provides a notification indicating that the remote operation of the working vehicle 1 was not performed, and therefore the worker can know that an instruction for the remote operation was issued for the working vehicle 1. That is, it is possible to provide a notification indicating that the remote operation was prevented in advance to the worker actively. Upon receiving this notification, the worker can perform work relating to the working vehicle 1 quickly if the worker has work to be done, and the worker can leave the working vehicle 1 immediately if the worker has no work to be done, making it possible to cancel the stop of the remote operation quickly. Thus, it is possible to let the worker immediately know that the remote operation was prevented, and provide support for smooth remote manipulation.

The first communicator 33 sends the remote manipulation information to the working vehicle 1, and the second communicator 23 sends information relating to the electronic device 40 to the remote device 30 and sends the not-performing notification R1 to the electronic device 40. With this configuration, the first communicator 33 of the remote device 30 sends the remote manipulation information to the working vehicle 1. The second communicator 23 of the working vehicle 1 sends the information relating to the electronic device 40 to the remote device 30 and sends the not-performing notification R1 to the electronic device 40. Thus, the working vehicle 1 sends information relating to the electronic device 40 to the remote device 30 when not performing the remote operation, and therefore a human remote manipulator can know the situation of the working vehicle 1 not remotely operated. In this case, since the working vehicle 1 sends the not-performing notification R1 to the electronic device 40, the working vehicle 1 is able to provide a notification indicating that the remote operation was prevented in advance to the worker carrying the electronic device 40. Thus, the human remote manipulator can know the situation of the working vehicle 1 and the worker in the vicinity of the working vehicle 1 can know that the remote operation was prevented in advance. It is possible to support the remote manipulation performed by the human remote manipulator and also to secure the safety of the worker in the vicinity of the working vehicle 1.

When the second communicator 23 receives the remote manipulation information, the second controller 21 sends position information indicating the position of the electronic device 40 relative to the working vehicle 1 as information relating to the electronic device 40 to the remote device 30 via the second communicator 23, and the first controller 31 determines that the remote operation of the working vehicle 1 is impermissible if the position indicated by the position information is within the first range r1, and determines that the remote operation of the working vehicle 1 is permissible if the position is outside the first range r1. With this configuration, the working vehicle 1, upon receiving the remote manipulation information from the remote device 30, sends the position information indicating the position of the electronic device 40 relative to the working vehicle 1 as information relating to the electronic device 40 to the remote device 30. The first controller 31 of the remote device 30 determines that the remote operation of the working vehicle 1 is impermissible if the position indicated by the position information is within the first range r1, and determines that the remote operation of the working vehicle 1 is permitted if the position is outside the first range r1. Thus, whether or not the remote operation of the working vehicle 1 is permissible or impermissible can be appropriately determined by the remote device 30.

The first controller 31 is configured or programmed to, upon determining that the remote operation of the working vehicle 1 is permissible, send a start signal to start the remote operation of the working vehicle 1 to the working vehicle 1 via the first communicator 33, and, upon determining that the remote operation of the working vehicle 1 is impermissible, send a stop signal indicating the stop of the remote operation of the working vehicle 1 to the working vehicle 1 via the first communicator 33. With this configuration, the remote device 30 sends the start signal to the working vehicle 1 if the remote operation of the working vehicle 1 is permissible and sends the stop signal to the working vehicle 1 if the remote operation of the working vehicle 1 is impermissible. Thus, the remote device 30 is able to issue an appropriate instruction to start or stop the remote operation of the working vehicle 1.

The remote device 30 includes the first notifier 36 to provide a notification to a human remote manipulator, and the first controller 31 causes, based on the position information, the first notifier 36 to provide a notification indicating at least one of (i) whether or not the electronic device 40 is positioned within the first range r1 from the working vehicle 1 or (ii) the distance between the working vehicle 1 and the electronic device 40. With this configuration, the first notifier 36 of the remote device 30 provides a notification indicating at least one of whether or not the electronic device 40 is positioned within the first range r1 from the working vehicle 1 or the distance between the working vehicle 1 and the electronic device 40. Thus, the human remote manipulator can know the positional relationship between the working vehicle 1 and the electronic device 40 carried by the worker in the vicinity of the working vehicle 1 (in other words, the positional relationship between the working vehicle 1 and the worker).

The second controller 21 sends the not-performing notification R1 and the notification about the content of the remote manipulation not performed and indicated by the remote manipulation information to the electronic device 40 via the second communicator 23, and the third notifier 43 provides a notification indicating that the remote operation of the working vehicle 1 was not performed and the content of the remote manipulation not performed. With this configuration, the third notifier 43 of the electronic device 40 provides a notification indicating that the remote operation of the working vehicle 1 was not performed and the content of the remote manipulation of the working vehicle 1 not performed. In other words, a notification indicating that the remote operation was not performed and the content of the remote manipulation not performed is provided to the worker carrying the electronic device 40 within the first range r1 of the working vehicle 1. Thus, the worker in the vicinity of the working vehicle 1 can also know the content of the remote manipulation not performed. That is, the worker in the vicinity of the working vehicle 1 can know the human remote manipulator's intention relating to the remote manipulation .

The second controller 21 is configured or programmed to, when the electronic device 40 is positioned within the second range r2 defined outside the first range r1, performs the remote operation based on the remote manipulation information with restriction and send the restricted-performance notification R2 indicating that the remote operation is performed with restriction to the electronic device 40 via the second communicator 23. The third notifier 43 provides a notification indicating that the remote operation of the working vehicle 1 is performed with restriction and the content of the remote manipulation indicated by the remote manipulation information. With this configuration, the third notifier 43 of the electronic device 40 provides a notification indicating that the remote operation of the working vehicle 1 is performed with restriction and the content of the remote manipulation of the working vehicle 1 performed with restriction. In other words, a notification indicating that the remote operation is performed with restriction and the content of the remote manipulation performed with restriction is provided to the worker carrying the electronic device 40 within the second range r2 defined outside the first range r1 from the working vehicle 1. Thus, the worker in the vicinity of the working vehicle 1 can also know the content of the remote manipulation performed with restriction. That is, the worker within the second range r2 from the working vehicle 1 can know the human remote manipulator's intention relating to the remote manipulation.

The second controller 21 acquires the worker information indicating the worker carrying the electronic device 40 via communication with the electronic device 40 and sends the worker information and the position information to the remote device 30 via the second communicator 23. The first controller 31 provides a notification of the worker information and the position information received by the first communicator 33 via the first notifier 36. With this configuration, the working vehicle 1 acquires the worker information indicating the worker carrying the electronic device 40 via communication with the electronic device 40 and sends the worker information and the position information to the remote device 30. The remote device 30 provides a notification of the worker information and the position information received by the electronic device 40. Thus, the human remote manipulator can know the worker relating to the remote operation not performed and the positional relationship between the worker and the working vehicle 1.

The worker information includes the contact information indicating the contact detail of the worker carrying the electronic device 40, and the first controller 31 makes contact using the contact detail indicated by the contact information upon receiving the contact instruction from the human remote manipulator. With this configuration, the working vehicle 1 acquires the worker information indicating the worker carrying the electronic device 40 (including the contact information indicating the contact detail of the worker carrying the electronic device 40) via communication with the electronic device 40, and sends the worker information and the position information to the remote device 30. The remote device 30 makes contact using the contact detail of the worker carrying the electronic device 40 upon receiving the contact instruction from the human remote manipulator. Thus, the human remote manipulator can contact the worker relating to the remote operation not performed. The human remote manipulator can instruct the worker to leave the working vehicle 1, ask the worker about the work status or the like of the working vehicle 1, and decide a restart, a standby, a stop, etc. of the remote operation easily and quickly.

### Second Embodiment

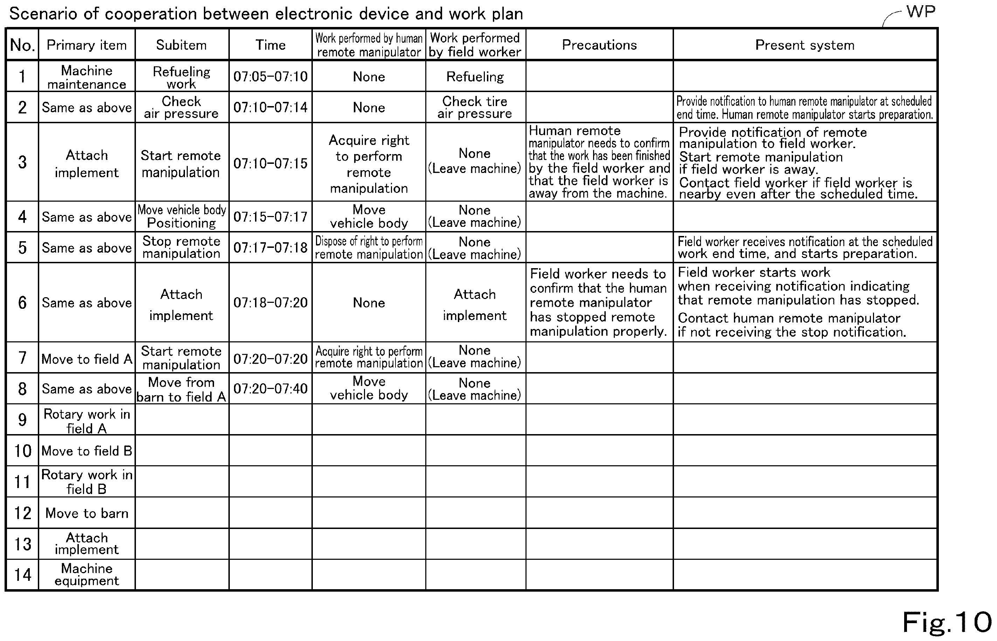

A remote support system 100 of a second embodiment is different from the first embodiment in that the electronic device 40 and the remote device 30 can provide notifications to each other in accordance with a work plan WP stored in the first storing device 32 of the remote device 30. FIG. 10 illustrates an example of the work plan WP in the remote support system 100 of the second embodiment. Hereinafter, a worker may be also referred to as a field worker.

As shown in FIG. 10, the first storing device 32 of the remote device 30 stores the work plan WP. The work plan WP is defined in advance such that a plurality of (for example, 14) planned work items are arranged in the order of working time. Each of the plurality of planned work items includes a work item for the working machine (working vehicle 1), a work time indicating the time period from a scheduled start time to a scheduled end time of the work item, the content of work relating to the work item to be performed by the human remote manipulator, and the content of work relating to the work item to be performed by the worker.

The work item for the working vehicle 1 includes a primary item and a subitem. For example, in the first planned work item, the primary item is "machine maintenance" and the subitem is "refueling work," and, in the second planned work item, the primary item is also "machine maintenance" and the subitem is "check air pressure." In the third to sixth planned work items, the primary items are all "attach implement" and the subitems are "start remote manipulation", "move vehicle body and positioning", "stop remote manipulation", and then "attach implement". It is noted that the "attach implement" refers to attaching the working device 2 (implement) to the linkage 8.

With regard to the first planned work item, the work time is "07:05-07:10," the human remote manipulator information (content of work to be performed by the human remote manipulator) is "none", and field worker work (content of work to be performed by the worker) is "refueling." With regard to the second planned work item, the working time is "07:10-07:14," the human remote manipulator information is "none", and the field worker work is "check tire air pressure".

With regard to the third planned work item, the working time is "07:15-07:15," the human remote manipulator information is "acquire the right to perform remote manipulation", and the field worker work is "none (leave the machine)." The precautions of the third planned work item are that "the human remote manipulator needs to confirm that the work has been finished by the field worker and that the field worker is away from the machine." The precautions are not stored in the work plan WP, but may be stored.

As shown in FIG. 10, at the start time of the first planned work item in the work plan WP, the first controller 31 sends manual-manipulation-permitting information to the communication terminal CT (first terminal CT1, second terminal CT2), and let the worker of the working vehicle 1 know that the work is permissible. The worker can perform the refueling work and check the air pressure of the working vehicle 1. The communication terminal CT (first terminal CT1, second terminal CT2), when receiving the manual-manipulation-permitting information, sends the remote-manipulation-not-permitting information to the remote device 30 by being operated by the worker. The remote device 30 receives the remote-manipulation-not-permitting information and stops the remote manipulation, i.e., prohibits the remote manipulation.

After the worker's work of the second planned work item has been finished, when the worker performs a predetermined operation, the communication terminal CT (first terminal CT1, second terminal CT2) sends the remote-manipulation-permitting information to the remote device 30. The remote device 30, upon receiving the remote-manipulation-permitting information, can know that manual manipulation or repair is not to be performed.

At the scheduled end time of the worker's work item that immediately precedes the work item of remote operation in the work plan WP, the first controller 31 provides a notification of the preparation of the remote operation to the human remote manipulator via the first notifier 36. As shown in FIG. 10, the second planned work item in the work plan WP immediately precedes the third planned work item (i.e., the work item of remote operation). When the scheduled end time of the second planned work item (for example, "07:14") is reached, the first notifier 36 provides a notification of the preparation of the remote operation to the human remote manipulator. Specifically, flag information (for example, a first flag is on) is stored in association with the second planned work item. The first controller 31, when there is the flag information relating to the planned work item, i.e., when the first flag is on in this example, provides a notification of the preparation of the remote operation via the first notifier 36. The first flag indicates the following: when the first flag is on, a notification is provided to the human remote manipulator; and when the first flag is off, a notification is not provided to the human remote manipulator.

As shown in FIG. 10, when the work end time of the second planned work item (scheduled end time: "07:14") is reached, the first notifier 36 provides a notification indicating such and/or indicating that the remote manipulation is requested to be prepared to the human remote manipulator. For example, at least one of the first notifier 36 or the display 34 provides a notification indicating that the work end time of the second planned work item is reached and that the remote manipulation is requested to be prepared to the human remote manipulator.

The first controller 31 of the remote device 30 sends the manual-manipulation-not-permitting information to the second terminal CT2 when the scheduled start time of the third planned work item (for example, "07:15") is reached. The communication terminal CT (first terminal CT1, second terminal CT2), when receiving the manual-manipulation-not-permitting information, provides a notification of the remote manipulation to let the worker of the working vehicle 1 know that the remote manipulation is to be performed. The first controller 31 starts the remote manipulation when the electronic device 40 is not within the first range r1, i.e., when the field worker is away from the working vehicle 1, at the scheduled start time of the work item of the remote operation.

On the other hand, when the electronic device 40 is within the first range r1, the first controller 31 makes contact using the contact detail indicated by the contact information based on the contact instruction from the human remote manipulator. As shown in FIG. 10, when the field worker is in the vicinity of the working vehicle 1 even after the scheduled time, the first controller 31 makes contact using the contact detail indicated by the contact information (for example, the cellular phone carried by the field worker) based on a contact instruction from the human remote manipulator. It is noted that, similar to the first embodiment, the worker information relating to the worker carrying the electronic device 40 positioned within the first range r1 (including the contact information indicating the contact detail of the worker) is sent from the working vehicle 1 to the remote device 30 and the display 34 displays the notification screen G3 (see FIG. 9) including the contact detail of the worker, and therefore the human remote operator can contact the worker.

As such, the first controller 31 provides a notification of the work plan WP and the worker information received by the first communicator 33 via the first notifier 36. For example, the first controller 31 causes the display 34 to display the work plan WP shown in FIG. 10 and the worker information. The first controller 31 may cause the display 34 to display the notification screen G3 (see FIG. 9) and the work plan WP shown in FIG. 10 together and adjacent to each other. The first controller 31 may cause the display 34 to display the worker information (name, contact detail and the like of the worker) in a pop-up window as well as displaying the present planned work item in the work plan WP (for example, the third planned work item) shown in FIG. 10 in an emphasized manner as compared to the other planned work items (all items other than the third planned work item).

The first controller 31, when the work item immediately following the work item of the remote manipulation of the working vehicle 1 is the worker's work item in the work plan WP, sends a work preparation signal to the working vehicle 1 via the first communicator 33 at the scheduled end time of the work item of the remote operation. As shown in FIG. 10, the fifth planned work item in the work plan WP is the work item of the remote operation, and the work item immediately following this (that is, sixth planned work item) is the worker's work item. The first controller 31 sends a work preparation signal to the working vehicle 1 via the first communicator 33 when the scheduled end time of the fifth planned work item (for example, "07:18") is reached. Specifically, flag information (for example, the second flag is on) is stored in association with the fifth planned work item, and, when there is the flag information associated with the planned work item, i.e., when the second flag is on in this example, the first controller 31 sends the work preparation signal to the working vehicle 1 via the first communicator 33. The second flag indicates the following: when the second flag is on, the work preparation signal is sent to the working vehicle 1; and when the second flag is off, the work preparation signal is not sent to the working vehicle 1.

The working vehicle 1 sends a work preparation notification to the electronic device 40 via the second communicator 23 upon receiving the work preparation signal. The electronic device 40 provides a notification of a work preparation via the third notifier 43 upon receiving the work preparation notification.

As shown in FIG. 10, when the work end time (scheduled end time) of the fifth planned work item is reached, a notification is provided by the working vehicle 1 to the electronic device 40, and the electronic device 40 provides a notification of the work preparation relating to the working vehicle 1. Thus, the notification from the electronic device 40 allows the worker to perform a work preparation relating to the working vehicle 1.

Upon receiving a stop instruction to stop the remote manipulation from the human remote manipulator, the first controller 31 sends a stop signal to stop the remote manipulation to the working vehicle 1 via the first communicator 33. This stop signal may be manual-manipulation-not-permitting information.

Upon receiving the stop signal to stop the remote manipulation, the working vehicle 1 sends a stop notification about the remote manipulation to the electronic device 40 via the communicator 23 . The electronic device 40 provides a notification of the start of work via the third notifier 43 upon receiving the stop notification about the remote manipulation. As shown in FIG. 10, the field worker starts work relating to the working vehicle 1 upon receiving the notification of the start of work from the third notifier 43 of the electronic device 40.

On the other hand, when the electronic device 40 has not received the stop notification about the remote manipulation even after the scheduled start time of the work item to be performed by the worker, the electronic device 40 provides a notification requesting to contact the remote device 30 via the third notifier 43. As shown in FIG. 10, the field worker contacts the human remote manipulator upon receiving the notification requesting to contact the remote device 30 via the third notifier 43 of the electronic device 40. For example, the field worker contacts a cellular phone of the human remote manipulator using their cellular phone or the like and asks the human remote manipulator to output a stop notification about the remote manipulation.

(Item A13) The remote support system 100 according to item A12, wherein the remote device 30 includes a first storing device (memory and/or storage) 32 to store a work plan WP, wherein the work plan WP is defined in advance such that a plurality of planned work items are arranged in the order of working time, each of the plurality of planned work items including a work item to be performed at the working machine (working vehicle 1), a work time indicating a time period from a scheduled start time to a scheduled end time of the work item, content of work relating to the work item to be performed by the human remote manipulator, and content of work relating to the work item to be performed by the worker, and the first notifier 36 is configured or programmed to provide a notification of the work plan WP and the worker information received by the remote device 30.

According to item A13, the human remote manipulator can know planned work item(s) not performed among the plurality of planned work items in the work plan WP and the worker relating to the remote operation not performed (that is, a worker indicated by the worker information). The human remote manipulator can also know the progress of the planned work items in the work plan WP and predict the time of restarting the remote operation and the like from the work plan WP.

(Item A14) The remote support system 100 according to item A13, wherein the first notifier 36 is configured or programmed to provide a notification of a preparation of the remote operation at the scheduled end time of the work item performed by the worker that immediately precedes the work item relating to the remote operation in the work plan WP, the first notifier 36 is configured or programmed to provide a notification of a start of the remote operation when the first terminal (electronic device 40) is not positioned within the first range r1 at the scheduled start time of the work item relating to the remote operation, and the remote device 30 is operable to make contact using the contact detail indicated by the contact information based on the contact instruction from the human remote manipulator when the first terminal (electronic device 40) is positioned within the first range r1.

According to item A14, when the scheduled end time of the work item performed by the worker that immediately precedes the work item relating to the remote operation in the work plan WP is reached, the first notifier 36 provides a notification of a preparation of the remote operation, and therefore the notification allows the human remote manipulator to prepare for the remote manipulation. When the electronic device 40 is not within the first range r1 at the scheduled start time of the work item relating to the remote operation, the first notifier 36 provides a notification of the start of the remote operation, and therefore this notification allows the human remote manipulator to start the remote operation. It is noted that, when the electronic device 40 is within the first range r1, the remote device 30 makes contact using the contact detail indicated by the contact information based on the contact instruction from the human remote manipulator. Thus, the human remote manipulator can prompt the worker within the first range r1 from the working vehicle 1 to move out of the first range r1, making it possible to restart the remote operation smoothly. The human remote manipulator can ask the worker within the first range r1 from the working vehicle 1 why they are within the first range r1, and can refrain from restarting the remote operation. As such, it is possible to ensure that the human remote manipulator and the worker cooperate together when starting the remote operation.

(Item A15) The remote support system 100 according to item A14, wherein the remote device 30 is operable to send a work preparation signal to the first terminal (electronic device 40) at the scheduled end time of the work item relating to the remote manipulation in a case that the work item immediately following the work item relating to the remote manipulation of the working machine (working vehicle 1) is the work item to be performed by the worker in the work plan WP, the first terminal (electronic device 40) is operable to provide a notification of a work preparation upon receiving the work preparation signal, the remote device 30 is operable to send a stop signal of the remote manipulation to the first terminal (electronic device 40) upon receiving a stop instruction to stop the remote manipulation from the human remote manipulator, and the first terminal (electronic device 40) is configured or programmed to provide a notification of a start of work upon receiving the stop signal of the remote manipulation, and provide a notification requesting to contact the remote device 30 when the first terminal has not received the stop signal of the remote manipulation even after the scheduled start time of the work item to be performed by the worker.

According to item A15, it is possible to ensure that the human remote manipulator and the worker cooperate together when stopping the remote operation.

(Item A16) The remote support system 100 according to any of items A8 to A14, wherein the first notifier 36 includes a display 34 provided in or on the remote device 30 and operable to provide a notification indicating that the manual manipulation or the repair is performed.

According to item A16, the display 34 of the remote device 30 provides a notification indicating that the manual manipulation or the repair is to be performed when the remote device 30 receives information relating to the manual manipulation or the repair of the working vehicle 1. Thus, it is possible to let the human remote manipulator know that the manual manipulation or the repair is to be performed by the worker.

(Item A17) The remote support system 100 according to items A2 or A3, wherein the communication terminal CT includes a second terminal CT2 provided in or on the working machine (working vehicle1) and operable to provide a notification indicating that the remote manipulation is performed.

According to item A17, the second terminal CT2 of the working vehicle 1 is operable to let the worker of the working vehicle 1 know that the remote manipulation of the working vehicle 1 is to be performed.

The first controller 31 sends a work preparation signal to the working vehicle 1 at the scheduled end time of the work item of the remote operation when the work item immediately following the work item relating to the remote operation of the working vehicle 1 is the work item to be performed by the worker in the work plan WP. Upon receiving the work preparation signal, the working vehicle 1 sends a work preparation notification to the electronic device 40 via the second communicator 23. Upon receiving the work preparation notification, the electronic device 40 provides a notification of the work preparation via the third notifier 43. The first controller 31 sends a stop signal to stop the remote manipulation to the working vehicle 1 upon receiving a stop instruction to stop the remote manipulation from the human remote manipulator. Upon receiving the stop signal to stop the remote manipulation, the working vehicle 1 sends a stop notification about the remote manipulation to the electronic device 40 via the second communicator 23 . Upon receiving the stop notification about the remote manipulation, the electronic device 40 provides a notification of the start of work via the third notifier 43, and provides a notification requesting to contact the remote device 30 via the third notifier 43 if it has not received the stop notification about the remote manipulation even after the scheduled start time of the work item to be performed by the worker.

With this configuration, when the work item immediately following the work item of the remote operation is the work item to be performed by the worker in the work plan WP, when the scheduled end time of the work item relating to the remote operation is reached, the work preparation signal is sent from the remote device 30 to the working vehicle 1, the work preparation notification is sent from the working vehicle 1 to the electronic device 40, and a notification of the work preparation is provided by the third notifier 43 of the electronic device 40. Thus, the worker can perform the work preparation for the working vehicle 1. When the human remote manipulator provides a stop instruction to stop the remote manipulation to the remote device 30, the stop signal to stop the remote manipulation is sent from the remote device 30 to the working vehicle 1, the stop notification about the remote manipulation is sent from the working vehicle 1 to the electronic device 40, and a notification of the start of work is provided by the third notifier 43 of the electronic device 40. Thus, the worker can know that the remote manipulation is stopped, and the work relating to the working vehicle 1 is allowed to be started. Then, the work relating to the working vehicle 1 to be performed by the worker can be started safely. On the other hand, the notification requesting to contact the remote device 30 is provided when the electronic device 40 has not received the stop notification about the remote manipulation even after the scheduled start time of the work item to be performed by the worker. Thus, the worker can contact the human remote manipulator. For example, the worker can instruct the human remote manipulator to stop the remote manipulation and/or ask the human remote manipulator why they do not stop the remote manipulation, and can also refrain from performing work until the remote operation is stopped. As such, it is possible to ensure that the human remote manipulator and the worker cooperate together when stopping the remote operation.

Note that the first controller 31 is configured or programmed to change the time schedule appropriately when, for example, work delays occur in regard to the work plan WP. For example, the first controller 31 is configured or programmed to obtain an updated version of the work plan WP by shifting, by the amount of the delay, each of the work times of the planned work items following the delayed work item. For example, the time at which the field worker left the working vehicle 1 is, for example, "07:22" although the scheduled end time of the third planned work item is, for example, "07:15", the first controller 31 obtains an updated version of the work plan WP in which the work times of the fourth and later planned work items are each delayed by the amount of the delay (7 minutes). For example, the work time of the fourth planned work item is changed from "07:15-07:17" to "07:22-07:24," and the work times of the fifth and later planned work items are changed similarly.

The first controller 31 of the remote device 30 may send the work plan WP to the communication terminal CT. The second terminal CT2 of the working vehicle 1 acquires the work plan WP and display the work plan WP on the display 22. Thus, the worker operating the working vehicle 1 can check the content of the work plan WP. When the first terminal CT1 is a portable terminal such as a cellular phone, or when the electronic device 40 includes a display screen, the first terminal CT1 may acquire the work plan WP and display the work plan WP.

### First Variation

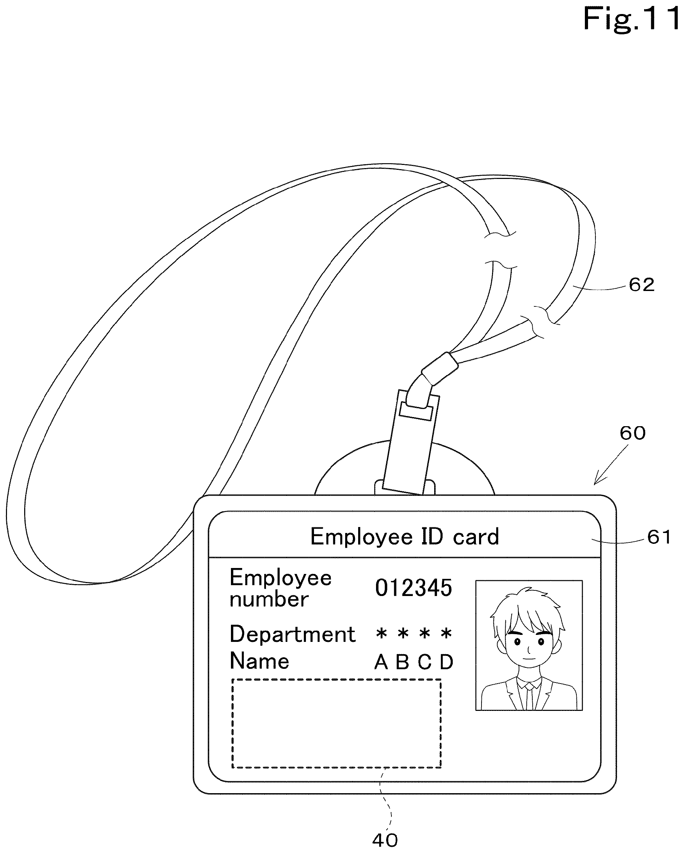

FIG. 11 illustrates an electronic device 40 of a first variation. As shown in FIG. 11, the electronic device 40 of the first variation is configured such that an IC tag is contained in an ID card 60 indicating the worker.

The ID card 60 is an employee ID card, for example. The ID card 60 includes a rectangular thin sheet body 61, a neck strap (neck string) 62 to be put around the worker's neck, and an electronic device 40 (IC tag) contained in the body 61. The body 61 has, on the front side thereof, employee information such as the employee number, department, name and a photo of the employee.

In FIG. 11, according to the electronic device 40 of the first variation, the IC tag is provided in the ID card 60 which shows a worker. Thus, it is possible to eliminate or reduce the likelihood that the worker will forget to bring the IC tag. With this, it is possible to further improve the safety of the worker near the working machine (working vehicle 1) and the certainty of the notifications.

It is noted that the electronic device 40 may be configured such that the IC tag is contained in an ID badge which is mandatory in the work field. Also in this case, it is possible to eliminate or reduce the likelihood that the worker will forget to bring the IC tag. With this, it is possible to further improve the safety of the worker near the working machine (working vehicle 1) and the certainty of the notifications.

It is noted that, although the electronic device 40 is an IC tag in the above example embodiments, this does not imply any limitation. The electronic device 40 may be a portable terminal such as a cellular phone. With this configuration, even if the working machine (working vehicle 1) receives the remote manipulation information when a worker carrying the portable terminal is within the first range r1, the working machine (working vehicle 1) does not perform the remote operation. Thus, the safety of the worker near the working machine is secured. Furthermore, since the portable terminal provides a notification indicating that the remote operation of the working machine was not performed, the worker can know that there is an instruction for the remote operation relating to the working machine.

While example embodiments of the present invention have been described above, it is to be understood that the example embodiments disclosed herein are considered as examples in all aspects and are not considered as limitations. The scope of the present invention is to be determined not by the foregoing description but by the claims, and is intended to include all variations and modifications within the scope of the claims and their equivalents.

### Reference Signs List

- 1: Working vehicle (Working machine)
- 21: Second controller (Controller)
- 22: Display (Second terminal)
- 23: Second communicator (Second terminal)
- 30: Remote device
- 32: First storing device (Storing device)
- 36: First notifier
- 40: Electronic device (First terminal)
- 100: Remote support system
- CT: Communication terminal
- CT1: First terminal
- CT2: Second terminal
- ND: Notifier

## Claims

1. A remote support system comprising:
a remote device to remotely manipulate a working machine;
a controller provided in or on the working machine and configured or programmed to control the working machine based on remote manipulation information relating to the remote manipulation from the remote device; and
a notifier to:
provide a notification indicating that the remote manipulation is to be performed when the working machine receives the remote manipulation information sent from the remote device; and
provide a notification indicating that manual manipulation or repair is to be performed when the remote device receives information relating to the manual manipulation or the repair of the working machine.

2. The remote support system according to claim 1, further comprising a communication terminal to send information indicating that the remote manipulation of the working machine is not permitted to the remote device when the manual manipulation or the repair is to be performed, and send information indicating that the remote manipulation of the working machine is permitted to the remote device when the manual manipulation or the repair is not to be performed.

3. The remote support system according to claim 2, wherein the remote device is operable to stop the remote manipulation upon receiving the information indicating that the remote manipulation of the working machine is not permitted, and not stop the remote manipulation upon receiving the information indicating that the remote manipulation of the working machine is permitted.

4. The remote support system according to claims 2 or 3, wherein the remote device is operable to send information indicating that the manual manipulation or the repair is not permitted to the communication terminal when performing the remote manipulation, and send information indicating that the manual manipulation or the repair is permitted to the communication terminal when not performing the remote manipulation.

5. The remote support system according to claim 4, wherein the controller is configured or programmed to actuate the working machine based on the manual manipulation when the communication terminal receives the information indicating that the manual manipulation is permitted, and not actuate the working machine based on the manual manipulation when the communication terminal receives the information indicating that the manual manipulation is not permitted.

6. The remote support system according to claim 5, wherein
the remote device is operable to send a not-performing notification indicating that the remote manipulation is not to be performed to the communication terminal; and
the communication terminal is operable to provide a notification of the not-performing notification.

7. The remote support system according to claim 6, wherein
the communication terminal includes a first terminal to be carried by a worker; and
the controller is configured or programmed to determine that the remote manipulation based on the remote manipulation information is impermissible if a position indicated by position information relating to the first terminal is within a first range from the working machine, and determine that the remote manipulation of the working machine is permissible if the position is outside the first range.

8. The remote support system according to claim 7, wherein
the notifier includes a first notifier provided in or on the remote device; and
the first notifier is configured or programmed to provide a notification of at least one of (i) whether or not the first terminal is positioned within the first range from the working machine or (ii) a distance between the working machine and the first terminal.

9. The remote support system according to claim 6, wherein
the remote device is operable to send, to the communication terminal, the not-performing notification and a notification of content of the remote manipulation not performed and indicated by the remote manipulation information;
the controller is configured or programmed to send, to the communication terminal, the not-performing notification and the notification of the content of the remote manipulation not performed; and
the communication terminal is operable to provide a notification indicating that the remote manipulation of the working machine was not performed and the content of the remote manipulation not performed.

10. The remote support system according to claim 7, wherein
the controller is configured or programmed to perform the remote manipulation based on the remote manipulation information with restriction and send a restricted-performance notification indicating that the remote manipulation is to be performed with restriction to the first terminal when the first terminal is positioned within a second range defined outside the first range; and
the first terminal is operable to provide a notification indicating that the remote manipulation of the working machine is to be performed with restriction and content of the remote manipulation indicated by the remote manipulation information.

11. The remote support system according to claim 8, wherein
the controller is configured or programmed to acquire worker information indicating a worker carrying the first terminal via communication with the first terminal and send the worker information and the position information to the remote device; and
the first notifier is configured or programmed to provide a notification of the worker information and the position information received by the remote device.

12. The remote support system according to claim 11, wherein
the worker information includes contact information indicating a contact detail of the worker carrying the first terminal; and
the remote device is operable to make contact using the contact detail indicated by the contact information upon receiving a contact instruction from a human remote manipulator.

13. The remote support system according to claim 12, wherein the remote device includes a memory and/or a storage to store a work plan; wherein
the work plan is defined in advance such that a plurality of planned work items are arranged in the order of working time, each of the plurality of planned work items including a work item to be performed at the working machine, a work time indicating a time period from a scheduled start time to a scheduled end time of the work item, content of work relating to the work item to be performed by the human remote manipulator, and content of work relating to the work item to be performed by the worker; and
the first notifier is configured or programmed to provide a notification of the work plan and the worker information received by the remote device.

14. The remote support system according to claim 13, wherein
the first notifier is configured or programmed to provide a notification of a preparation of the remote manipulation at the scheduled end time of the work item performed by the worker that immediately precedes the work item relating to the remote manipulation in the work plan;
the first notifier is configured or programmed to provide a notification of a start of the remote manipulation when the first terminal is not positioned within the first range at the scheduled start time of the work item relating to the remote manipulation; and
the remote device is operable to make contact using the contact detail indicated by the contact information based on the contact instruction from the human remote manipulator when the first terminal is positioned within the first range.

15. The remote support system according to claim 14, wherein
the remote device is operable to send a work preparation signal to the first terminal at the scheduled end time of the work item relating to the remote manipulation in a case that the work item immediately following the work item relating to the remote manipulation of the working machine is the work item to be performed by the worker in the work plan;
the first terminal is operable to provide a notification of a work preparation upon receiving the work preparation signal;
the remote device is operable to send a stop signal of the remote manipulation to the first terminal upon receiving a stop instruction to stop the remote manipulation from the human remote manipulator; and
the first terminal is configured or programmed to provide a notification of a start of work upon receiving the stop signal of the remote manipulation, and provide a notification requesting to contact the remote device when the first terminal has not received the stop signal of the remote manipulation even after the scheduled start time of the work item to be performed by the worker.

16. The remote support system according to claim 8, wherein the first notifier includes a display provided in or on the remote device and operable to provide a notification indicating that the manual manipulation or the repair is to be performed.

17. The remote support system according to claims 2 or 3, wherein the communication terminal is a second terminal provided in or on the working machine and operable to provide a notification indicating that the remote manipulation is performed.
